# EUROPEAN PATENT APPLICATION

(11) **EP 3 375 594 A1**
(43) Date of publication of application: **19.09.2018**
(21) Application number: 18153927.1
(22) Date of filing: 29.01.2018
(51) Int. Cl.: B29C 64/106, C08L 67/00, C08L 33/08

(54) **THREE-DIMENSIONAL MODELED-OBJECT MANUFACTURING COMPOSITION AND THREE-DIMENSIONAL MODELED-OBJECT MANUFACTURING METHOD**

(30) Priority: 28.02.2017 JP 2017037626
(71) Applicant: Seiko Epson Corporation, Tokyo 160-8801 (JP)
(72) Inventor: OKAMOTO, Eiji, Suwa-shi, Nagano 392-8502 (JP); WADA, Hiroshi, Suwa-shi, Nagano 392-8502 (JP); TSUNOYA, Akihiko, Suwa-shi, Nagano 392-8502 (JP); ISHIDA, Masaya, Suwa-shi, Nagano 392-8502 (JP)
(74) Representative: Miller Sturt Kenyon

(57) **Abstract**

A three-dimensional modeled-object manufacturing composition used for forming a layer in a method of manufacturing a three-dimensional modeled-object in which the layer is formed using a discharge method and a plurality of the layers is laminated, the composition includes a plurality of particles and a solvent dispersing the particles. In the composition, a viscosity η1 at a shear rate of 10 s⁻¹ at 25°C is 6,000 mPa·s or higher and a viscosity η2 at the shear rate of 1,000 s⁻¹ at 25°C is 5,000 mPa·s or lower.

## Description

### BACKGROUND

### 1. Technical Field

The present invention relates to a three-dimensional modeled-object manufacturing composition and a three-dimensional modeled-object manufacturing method.

### 2. Related Art

In the related art, a three-dimensional modeled-object using a composition containing a plurality of particles has been manufactured. In particular, in recent years, a laminating method (three-dimensional modeling method) in which, after model data of a three-dimensional object is divided into a plurality of two-dimensional cross-sectional layer data (slice data), while sequentially modeling a cross-section member (layer) corresponding to each two-dimensional cross-sectional layer data, the three-dimensional modeled-object is formed by sequentially laminating the cross-section member is attracted attention.

Using the laminating method, it is possible to immediately form a three-dimensional modeled-object as long as there is model data of the three-dimensional modeled-object which is to be modeled. Using the laminating method, there is no need to create a mold prior to modeling. Therefore, it is possible to quickly and inexpensively form a three-dimensional modeled-object. In addition, since a thin plate-shaped cross-section member is laminated one by one to form the three-dimensional modeled-object, even in a case of a complicated object, for example, having an internal structure, it is possible to form the three-dimensional modeled-object as an integrated modeled-object without division into a plurality of parts.

Examples of a three-dimensional modeled-object manufacturing method include a method using a composition containing a particle and a solvent dispersing the particle (for example, refer to JP-A-2008-184622).

In this manner, in a case where a layer having a predetermined shape (pattern) is formed by discharging the composition containing the particle and the solvent dispersing the particle using a discharge method, the following problems occur. That is, in a case where a viscosity of the composition is excessively high, the composition tends to be defectively discharged. Then, it is difficult to form a desired shape. Therefore, dimensional accuracy of the three-dimensional modeled-object tends to decrease. In addition, in a case where the viscosity of the composition is excessively low, unwilling deformation tends to occur on a pattern formed by using the composition, due to sagging. Therefore, the dimensional accuracy of the three-dimensional modeled-object tends to decrease. In particular, the problems occur more remarkably as the number of laminates increases.

### SUMMARY

An advantage of some aspects of the invention is to provide a three-dimensional modeled-object manufacturing composition which can be used for manufacturing a three-dimensional modeled-object that is excellent in dimensional accuracy, and is to provide a three-dimensional modeled-object manufacturing method through which a three-dimensional modeled-object that is excellent in dimensional accuracy can be manufactured.

The invention is realized in the following aspects.

According to an aspect of the invention, a three-dimensional modeled-object manufacturing composition used for forming a layer in a method of manufacturing a three-dimensional modeled-object in which the layer is formed using a discharge method and a plurality of the layers is laminated, the composition includes a plurality of particles and a solvent dispersing the particles, in which a viscosity η1 at a shear rate of 10 s⁻¹ at 25°C is 6,000 mPa·s or higher and a viscosity η2 at the shear rate of 1,000 s⁻¹ at 25°C is 5,000 mPa·s or lower.

Accordingly, it is possible to provide a three-dimensional modeled-object manufacturing composition which can be used for manufacturing a three-dimensional modeled-object that is excellent in dimensional accuracy.

In the three-dimensional modeled-object manufacturing composition, it is preferable that a content percentage of the particles be 50 volume% or lower.

Accordingly, it is possible to easily prepare the three-dimensional modeled-object manufacturing composition that satisfies conditions of the viscosities η1 and η2, and it is possible to further certainly improve the dimensional accuracy and the reliability of the three-dimensional modeled-object. In addition, it is possible to more stably perform discharging of the three-dimensional modeled-object manufacturing composition for a long period.

In the three-dimensional modeled-object manufacturing composition, it is preferable that a maximum particle diameter Dmax of the particles be 50 µm or smaller.

Accordingly, it is possible to further improve the dimensional accuracy and the reliability of the manufactured three-dimensional modeled-object while further improving productivity of the three-dimensional modeled-object.

In the three-dimensional modeled-object manufacturing composition, it is preferable that the composition further include a binder having a function of temporarily binding the particles in a state where the solvent is removed.

Accordingly, it is possible to more effectively prevent the pattern formed by using the three-dimensional modeled-object manufacturing composition from unwillingly deforming, and further improve the dimensional accuracy of the three-dimensional modeled-object.

In the three-dimensional modeled-object manufacturing composition, it is preferable that a content percentage of the binder be 5.0 volume% or higher.

Accordingly, it is possible to more effectively exhibit the function of temporarily binding the particles. It is possible to more effectively prevent the binder or decomposition product thereof from unwillingly remaining in the finally obtained three-dimensional modeled-object. In addition, it is possible to easily prepare the three-dimensional modeled-object manufacturing composition that satisfies conditions of the viscosities η1 and η2. It is possible to further improve the productivity of the three-dimensional modeled-object.

In the three-dimensional modeled-object manufacturing composition, it is preferable that acrylic resin and polyester be contained as the binder.

Accordingly, it is possible to lower the viscosity η2 of the three-dimensional modeled-object manufacturing composition while increasing the viscosity η1 of the three-dimensional modeled-object manufacturing composition. It is possible to further improve both the discharging property of the three-dimensional modeled-object manufacturing composition using the discharge method and the stability of a shape of the pattern formed using the discharge method. It is possible to further improve the dimensional accuracy of the three-dimensional modeled-object.

According to another aspect of the invention, a three-dimensional modeled-object manufacturing method includes forming a layer by discharging the three-dimensional modeled-object manufacturing composition according to the aspect; and removing the solvent contained in the layer, in which a series of processes including the forming of the layer and the removing of the solvent are repeatedly performed.

Accordingly, it is possible to provide the three-dimensional modeled-object manufacturing method through which a three-dimensional modeled-object that is excellent in dimensional accuracy can be manufactured.

In the three-dimensional modeled-object manufacturing method, it is preferable that the forming of the layer include forming a first pattern and forming a second pattern. In at least one of the forming of the first pattern and the forming of the second pattern, it is preferable that the three-dimensional modeled-object manufacturing composition be used.

Accordingly, it is possible to further improve the dimensional accuracy and the reliability of the three-dimensional modeled-object.

In the three-dimensional modeled-object manufacturing method, it is preferable that bonding the particles be further included after the series of processes are repeated.

Accordingly, it is possible to obtain the three-dimensional modeled-object of which a property such as the mechanical strength is particularly excellent. In addition, it is possible to prevent the binder from unwillingly remaining in the three-dimensional modeled-object. It is possible to further enhance the reliability of the three-dimensional modeled-object. In addition, it is possible to further improve the productivity of the three-dimensional modeled-object.

In the three-dimensional modeled-object manufacturing method, it is preferable that the three-dimensional modeled-object manufacturing composition be discharged by a dispenser.

Accordingly, it is possible to further improve the dimensional accuracy of the three-dimensional modeled-object. In addition, it is possible to easily form a layer having a relatively large thickness, and further improve the productivity of the three-dimensional modeled-object.

### BRIEF DESCRIPTION OF THE DRAWINGS

Embodiments of the invention will now be described by way of example only with reference to the accompanying drawings, wherein like numbers reference like elements.
Fig. 1 is a longitudinal sectional view schematically showing a process (first pattern forming process) of a three-dimensional modeled-object manufacturing method according to a preferred embodiment of the invention.
Fig. 2 is a longitudinal sectional view schematically showing a process (second pattern forming process) of the three-dimensional modeled-object manufacturing method according to the preferred embodiment of the invention.
Fig. 3 is a longitudinal sectional view schematically showing a process (solvent removal process) of the three-dimensional modeled-object manufacturing method according to the preferred embodiment of the invention.
Fig. 4 is a longitudinal sectional view schematically showing the process (first pattern forming process) of the three-dimensional modeled-object manufacturing method according to the preferred embodiment of the invention.
Fig. 5 is a longitudinal sectional view schematically showing the process (second pattern forming process) of the three-dimensional modeled-object manufacturing method according to the preferred embodiment of the invention.
Fig. 6 is a longitudinal sectional view schematically showing the process (solvent removal process) of the three-dimensional modeled-object manufacturing method according to the preferred embodiment of the invention.
Fig. 7 is a longitudinal sectional view schematically showing a process of the three-dimensional modeled-object manufacturing method according to the preferred embodiment of the invention.
Fig. 8 is a longitudinal sectional view schematically showing a process (binder removal process) of the three-dimensional modeled-object manufacturing method according to the preferred embodiment of the invention.
Fig. 9 is a longitudinal sectional view schematically showing a process (bonding process) of the three-dimensional modeled-object manufacturing method according to the preferred embodiment of the invention.
Fig. 10 is a longitudinal sectional view schematically showing a process (support section removal process) of the three-dimensional modeled-object manufacturing method according to the preferred embodiment of the invention.
Fig. 11 is a flowchart illustrating the three-dimensional modeled-object manufacturing method according to the preferred embodiment of the invention.
Fig. 12 is a side view schematically showing a three-dimensional modeled-object manufacturing apparatus according to a preferred embodiment.

### DESCRIPTION OF EXEMPLARY EMBODIMENTS

Hereinafter, a preferred embodiment will be described in detail with reference to the accompanying drawings.

### Three-Dimensional Modeled-Object Manufacturing Method

First, a three-dimensional modeled-object manufacturing method according to an embodiment of the invention will be described.

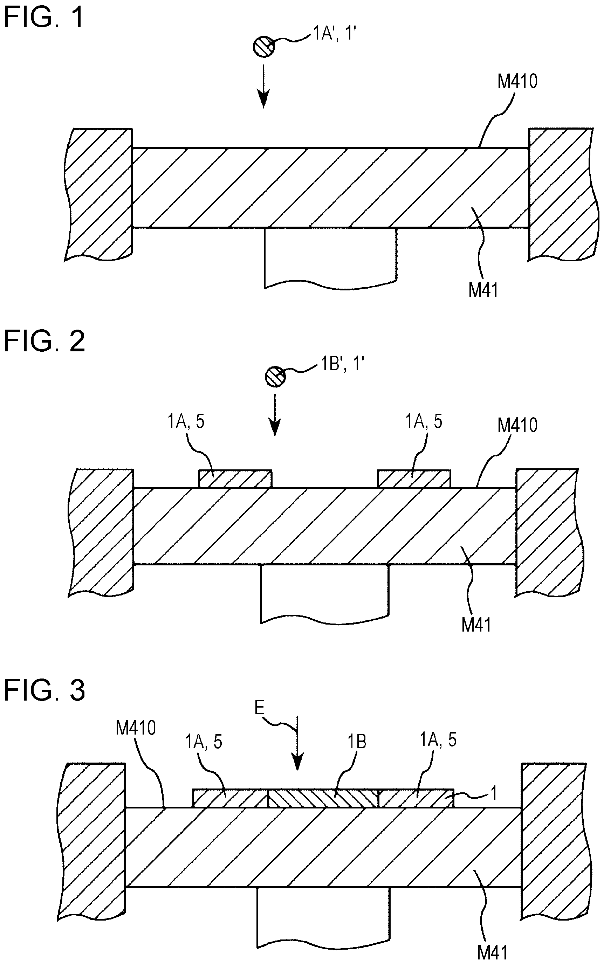

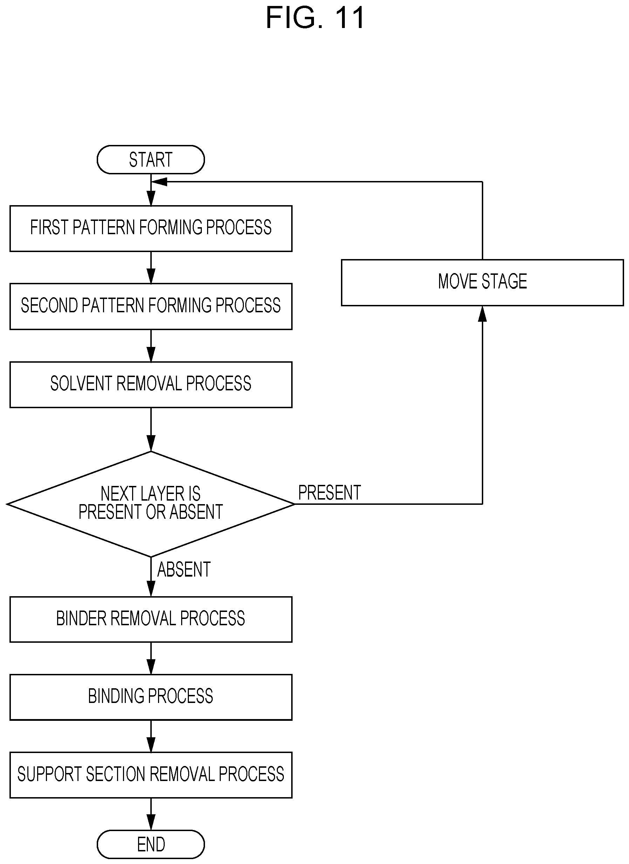

Figs. 1 to 10 show a longitudinal sectional view schematically showing a process of the three-dimensional modeled-object manufacturing method according to the preferred embodiment of the invention. Fig. 11 is a flowchart illustrating the three-dimensional modeled-object manufacturing method according to the preferred embodiment of the invention.

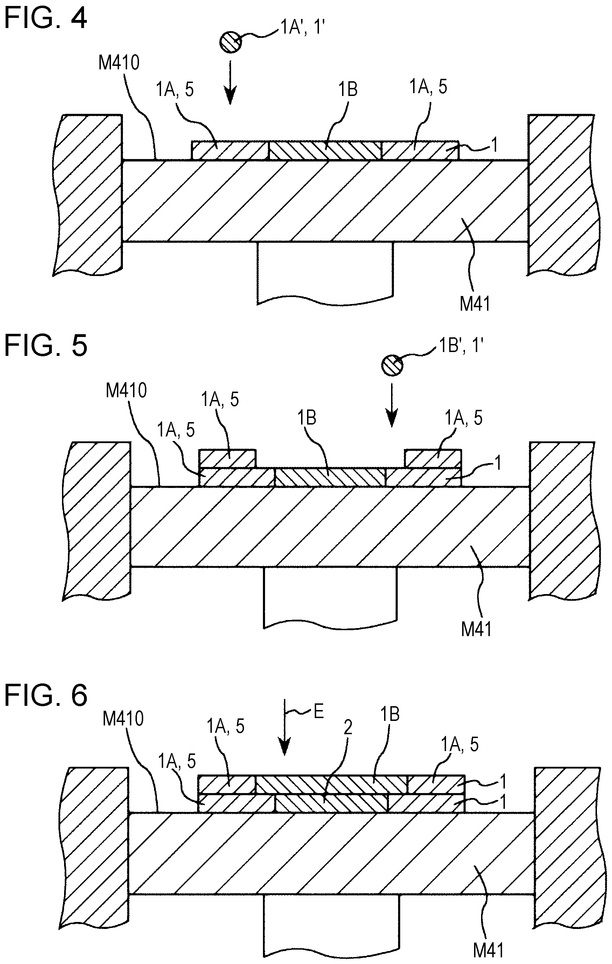

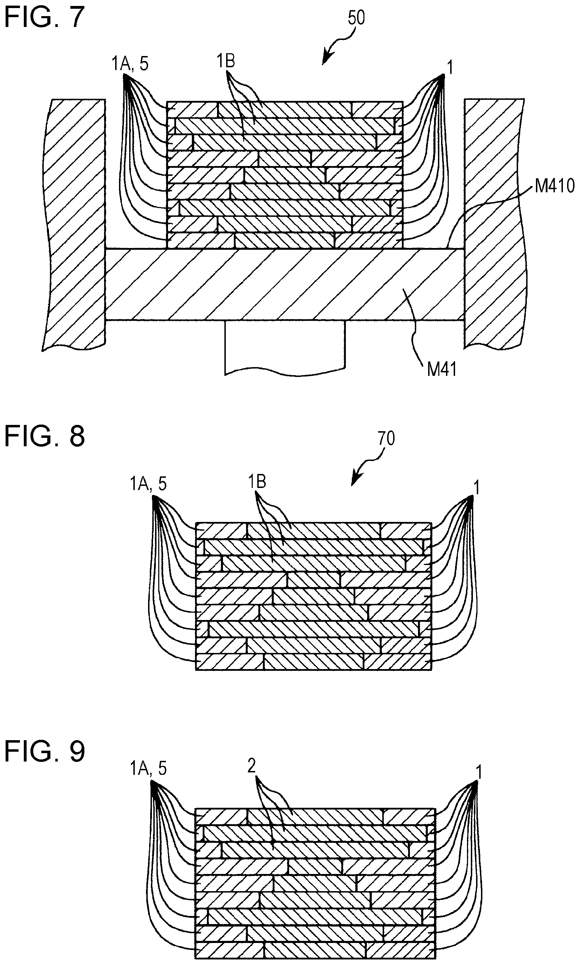

In the manufacturing method of a three-dimensional modeled-object 10 of the present embodiment, a laminate 50 is obtained (refer to Fig. 7) by repeatedly performing a series of processes including a layer forming process (refer to Figs. 1, 2, 4, and 5) in which a three-dimensional modeled-object manufacturing composition (layer forming composition) 1' is discharged to form a layer 1 and a solvent removal process (refer to Figs. 3 and 6) in which a solvent contained in the layer 1 is removed. Then, a bonding process (refer to Fig. 9) in which particles contained in the laminate 50 (layer 1) are bonded is performed with respect to the laminate 50.

The three-dimensional modeled-object manufacturing composition (layer forming composition) 1' is used for forming the layer 1. The three-dimensional modeled-object manufacturing composition includes a plurality of particles (main ingredient particles) and a solvent dispersing the particles. In the composition, the viscosity η1 at a shear rate of 10 s⁻¹ at 25°C is 6,000 mPa·s or higher and the viscosity η2 at the shear rate of 1,000 s⁻¹ at 25°C is 5,000 mPa·s or lower.

Accordingly, it is possible to provide a method of manufacturing the three-dimensional modeled-object 10, through which the three-dimensional modeled-object 10 that is excellent in dimensional accuracy can be more efficiently manufactured with excellent productivity.

More specifically, since the viscosity η2 in a state where the shear rate is relatively high (shear rate of 1,000 s⁻¹/25°C) is relatively low (5,000 mPa·s or lower), when discharging a composition 1' at a relatively high shear rate, the viscosity of the composition 1' is set to be relatively low. Thus, the composition can be stably discharged. On the other hand, since the viscosity η1 in a state where the shear rate is relatively low (shear rate of 10 s⁻¹/25°C) is sufficiently large (6,000 mPa·s or higher), it is possible to sufficiently lower fluidity of the composition 1' in a static state where the composition has discharged using the discharge method to form the layer 1, and is possible to sufficiently increase the stability of the shape of the layer 1. In this manner, it is possible to effectively prevent the composition 1' from being defectively discharged or the layer 1 from unwillingly deforming after formation. It is possible to improve the dimensional accuracy of the finally obtained three-dimensional modeled-object 10.

On the contrary, in a case where the conditions are not satisfied, the excellent effects are not sufficiently obtained.

For example, when the viscosity of the three-dimensional modeled-object manufacturing composition at the shear rate of 10 s⁻¹ at 25°C is excessively low, the fluidity of the layer (three-dimensional modeled-object manufacturing composition) that is formed using discharge method increases. Therefore, the stability of the shape of the layer cannot be enhanced and the unwilling deformation of the layer tends to occur. In particular, when the layer is stacked, so-called sagging tends to occur. Accordingly, it is not possible to obtain the three-dimensional modeled-object excellent in the dimensional accuracy. This tendency is more remarkable as the number of laminates increases (For example, in a case where the number of the laminates is 50 or more).

In addition, when the viscosity of the three-dimensional modeled-object manufacturing composition at the shear rate of 1,000 s⁻¹ at 25°C is excessively high, it is difficult to stably discharge the three-dimensional modeled-object manufacturing composition using discharge method, and to form the layer having a pattern of desired shape. It is not possible to obtain the three-dimensional modeled-object sufficiently excellent in the dimensional accuracy. These problems remarkably occur in a case where the pattern having a fine shape is formed.

In the embodiment of the invention, the solvent refers to a volatile liquid that is a liquid (dispersion medium) capable of dispersing the particles.

The viscosities η1 and η2 can be obtained by measurement using a rheometer. Examples of the rheometer include Physica MCR-300 (manufactured by Anton Paar GmbH).

In addition, the three-dimensional modeled-object manufacturing composition satisfying the conditions usually has a paste form.

In the embodiment of the invention, the discharge method refers to a method in which the composition (three-dimensional modeled-object manufacturing composition) is discharged into a predetermined pattern to form a pattern corresponding to the layer. The discharge method is different from a method in which a supplied composition is flattened using a squeegee, a roller, or the like to form a layer.

As described above, the viscosity η1 of the three-dimensional modeled-object manufacturing composition 1' at the shear rate of 10 s⁻¹ at 25°C may be 6,000 mPa·s or higher. The viscosity η1 is preferably 7,000 mPa·s or higher and more preferably 7,500 mPa·s to 20,000 mPa·s. Accordingly, the effects are more remarkably exhibited.

In addition, the viscosity η2 of the three-dimensional modeled-object manufacturing composition 1' at the shear rate of 1,000 s⁻¹ at 25°C may be 5,000 mPa·s or lower. The viscosity η2 is preferably 4,500 mPa·s or lower and more preferably 500 mPa·s to 4,000 mPa·s. Accordingly, the effects are more remarkably exhibited.

Examples of a factor determining the viscosities η1 and η2 are various. For example, a composition (more specifically, such as composition and content percentage of the binder) of the three-dimensional modeled-object manufacturing composition 1' is included.

In the embodiment, the layer forming process is performed using an entity section forming composition 1B' used for forming entity section (bonded section) 2 of the three-dimensional modeled-object 10 and a support section forming composition 1A' used for forming a support section (supporting section, supporting material) 5 that supports a portion to be an entity section 2, as the three-dimensional modeled-object manufacturing composition (layer forming composition) 1'. The layer forming process includes a first pattern forming process (pattern forming process for the support section) in which the support section forming composition 1A' is discharged to form a first pattern (pattern for the support section) 1A and a second pattern forming process (pattern forming process for the entity section) in which the entity section forming composition 1B' is discharged to form a second pattern (pattern for the entity section) 1B.

At least one of the entity section forming composition 1B' and the support section forming composition 1A' as the three-dimensional modeled-object manufacturing composition (composition) 1' satisfies the conditions (the composition includes the plurality of particles, the solvent dispersing the particles, and the binder, in which the viscosity η1 at a shear rate of 10 s⁻¹ at 25°C is 6,000 mPa·s or higher, and the viscosity η2 at the shear rate of 1,000 s⁻¹ at 25°C is 5,000 mPa·s or lower).

Accordingly, it is possible to further improve the dimensional accuracy and the reliability of the three-dimensional modeled-object 10.

At least one of the entity section forming composition 1B' and the support section forming composition 1A' as the three-dimensional modeled-object manufacturing composition (composition) 1' may satisfy the conditions. In the following description, a case where both the entity section forming composition 1B' and the support section forming composition 1A' satisfy the conditions will be mainly described.

Hereinafter, each process will be described in detail.

### First Pattern Forming Process

In the first pattern forming process, for example, the support section forming composition 1A' is discharged onto a plane M410 of a stage M41 to form a first pattern 1A.

The first pattern 1A is formed by discharging the support section forming composition 1A'. Therefore, it is possible to appropriately form even a pattern having fine shape and complicated shape.

The discharge method of the support section forming composition 1A' is not particularly limited. Such as an ink jet apparatus can be used for discharging. However, it is preferable that the support section forming composition 1A' be discharged by a dispenser.

Since the dispenser (in particular, a piston-type dispenser) is used, it is possible to appropriately apply shear stress at the relatively high shear rate with respect to the support section forming composition 1A' to be discharged. Even in a case where the viscosity (for example, viscosity η1) at the static state is relatively high, it is possible to more effectively lower the viscosity when discharging and to more appropriately discharge the composition 1A'. Accordingly, it is possible to further improve the dimensional accuracy of the finally obtained three-dimensional modeled-object 10. In addition, it is possible to easily form the layer 1 having a relatively large thickness and to further improve the productivity of the three-dimensional modeled-object 10.

In the first pattern forming process, the support section forming composition 1A' may be discharged in a continuous form, and may be discharged as a plurality of liquid droplets. However, it is preferable that the composition 1A' be discharged as the plurality of liquid droplets.

Accordingly, for example, it is possible to appropriately cope with manufacturing of the three-dimensional modeled-object 10 having a fine structure, and to further improve the dimensional accuracy of the three-dimensional modeled-object 10.

In a case where the support section forming composition 1A' is discharged as the plurality of liquid droplets in the first pattern forming process, a volume per discharged liquid droplet is preferably 1 pL to 100,000 pL (100 nL) and more preferably 10 pL to 5,000 pL (5 nL).

Accordingly, for example, it is possible to appropriately cope with manufacturing of the three-dimensional modeled-object 10 having a fine structure, and to further improve the dimensional accuracy of the three-dimensional modeled-object 10. In addition, it is possible to further improve the productivity of the three-dimensional modeled-object 10.

In the first pattern forming process, the support section forming composition 1A' may be discharged in a heated state or a cooled state; however, it is preferable that a temperature (a temperature of the support section forming composition 1A' when discharging) of the support section forming composition 1A' in this process be 5°C to 70°C. Accordingly, the effects due to conditions satisfying the viscosities η1 and η2 are more remarkably exhibited.

In manufacturing the three-dimensional modeled-object 10, various types of compositions may be used as the support section forming composition 1A'.

The support section forming composition 1A' will be described later.

### Second Pattern Forming Process

In the second pattern forming process, the entity section forming composition 1B' is discharged to form the second pattern 1B.

Since the second pattern 1B is formed by discharging the entity section forming composition 1B', it is possible to appropriately form even a pattern having fine shape and complicated shape.

In particular, in the embodiment, the entity section forming composition 1B' is discharged to a region surrounded with the first pattern 1A. Therefore, the entire periphery of the second pattern 1B is to contact with the first pattern 1A.

Accordingly, it is possible to further improve the dimensional accuracy of the finally obtained three-dimensional modeled-object 10.

The discharge method of the entity section forming composition 1B' is not particularly limited. Such as an ink jet apparatus can be used for discharging. However, it is preferable that the entity section forming composition 1B' be discharged by the dispenser.

Since the dispenser (in particular, a piston-type dispenser) is used, it is possible to appropriately apply shear stress at the relatively high shear rate with respect to the entity section forming composition 1B' to be discharged. Even in a case where the viscosity (for example, viscosity η1) at the static state is relatively high, it is possible to more effectively lower the viscosity when discharging and to more appropriately discharge the composition 1B'. Accordingly, it is possible to further improve the dimensional accuracy of the finally obtained three-dimensional modeled-object 10. In addition, it is possible to easily form the layer 1 having the relatively large thickness and to further improve the productivity of the three-dimensional modeled-object 10.

In the second pattern forming process, the entity section forming composition 1B' may be discharged in a continuous form, and may be discharged as a plurality of liquid droplets. However, it is preferable that the composition 1B' be discharged as the plurality of liquid droplets.

Accordingly, for example, it is possible to more appropriately cope with manufacturing of the three-dimensional modeled-object 10 having a fine structure, and to further improve the dimensional accuracy of the three-dimensional modeled-object 10.

In a case where the entity section forming composition 1B' is discharged as the plurality of liquid droplets in the second pattern forming process, a volume per discharged liquid droplet is preferably 1 pL to 100,000 pL (100 nL) and more preferably 10 pL to 5,000 pL (5 nL).

Accordingly, for example, it is possible to appropriately cope with manufacturing of the three-dimensional modeled-object 10 having a fine structure, and to further improve the dimensional accuracy of the three-dimensional modeled-object 10. In addition, it is possible to further improve the productivity of the three-dimensional modeled-object 10.

In the second pattern forming process, the entity section forming composition 1B' may be discharged in a heated state or a cooled state; however, it is preferable that a temperature (a temperature of the entity section forming composition 1B' when discharging) of the entity section forming composition 1B' in this process be 5°C to 70°C. Accordingly, the effects due to conditions satisfying the viscosities η1 and η2 are more remarkably exhibited.

In manufacturing the three-dimensional modeled-object 10, various types of compositions may be used as the entity section forming composition 1B'.

Accordingly, for example, the materials can be combined depending on the properties required for each portion of the three-dimensional modeled-object 10. It is possible to further improve the properties (including appearance, functionality (such as elasticity, toughness, heat resistance, and corrosion resistance), and the like) of the three-dimensional modeled-object 10 as a whole.

The entity section forming composition 1B' will be described later.

The layer 1 having the first pattern 1A and the second pattern 1B is formed by performing the first pattern forming process and the second pattern forming process. In other words, the layer forming process includes the first pattern forming process and the second pattern forming process.

A thickness of each layer 1 which is formed using the support section forming composition 1A' and entity section forming composition 1B' is not particularly limited. The thickness is preferably 10 µm to 500 µm, and more preferably 20 µm to 250 µm.

Accordingly, it is possible to improve the productivity of the three-dimensional modeled-object 10 and further improve the dimensional accuracy of the three-dimensional modeled-object 10.

### Solvent Removal Process

In the solvent removal process, a solvent contained in the layer 1 is removed.

Accordingly, the fluidity of the layer 1 is further lowered and the stability of the shape of the layer 1 is further improved. In addition, it is possible to effectively prevent the layer 1 from unwillingly deforming along with a rapid volatilization (such as bumping) of the solvent in the subsequent bonding process, by performing the solvent removal process. Accordingly, it is possible to more certainly obtain the three-dimensional modeled-object 10 excellent in the dimensional accuracy and further improve reliability of the three-dimensional modeled-object 10. In addition, it is possible to further improve the productivity of the three-dimensional modeled-object 10.

Examples of a solvent removal method include heating the layer 1, irradiating the layer 1 with infrared rays, placing the layer 1 under reduced pressure, and supplying gas (for example, gas having a relative humidity of 30% or less) such as dry air, in which a content of a liquid component is small. In addition, two or more selected therefrom may be performed in combination.

In the configuration in the drawings, the layer 1 is heated by supplying thermal energy E from a heater.

In the embodiment, the solvent removal process is successively performed for each layer 1 (not performed at once with respect to the plurality of layers 1). That is, a series of repeating processes including the layer forming process include the solvent removal process.

Therefore, it is possible to more effectively prevent the relatively large amount of solvent from unwillingly remaining inside the laminate 50 including the plurality of layers 1. Accordingly, it is possible to further improve the reliability of the finally obtained three-dimensional modeled-object 10. In addition, it is possible to further effectively prevent the unwilling deformation from occurring in the laminate 50 which is obtained by laminating the layer 1.

In the solvent removal process, it is not necessary to completely remove the solvent contained in the layer 1. Even in such a case, it is possible to sufficiently remove the remaining solvent in the subsequent process. The solvent removal process includes a state in which an amount of the dissolved binder increases relative to an amount of the solvent contained in the layer 1 due to the volatilization of the solvent and the function of temporarily binding the particles is exhibited.

The content percentage of the solvent in the layer 1 after the solvent removal process is preferably 0.1 mass% to 25 mass% and more preferably 0.5 mass% to 20 mass%.

Accordingly, it is possible to effectively prevent the layer 1 from unwillingly deforming along with the rapid volatilization (such as bumping) of the solvent in the subsequent process. It is possible to more certainly obtain the three-dimensional modeled-object 10 excellent in the dimensional accuracy and further improve reliability of the three-dimensional modeled-object 10. In addition, it is possible to further improve the productivity of the three-dimensional modeled-object 10.

In manufacturing the three-dimensional modeled-object 10, the laminate 50 in which the plurality of layers 1 is laminated is obtained (refer to Fig. 7) by repeatedly performing a series of processes including the layer forming process (first pattern forming process and second pattern forming process) and solvent removal process, by a predetermined number of times.

That is, it is determined whether or not a new layer 1 is to be formed on the already formed layer 1. Then, in a case where the layer 1 to be formed is present, the new layer 1 is formed. In a case where the layer 1 to be formed is absent, the process (described later in detail) is performed with respect to the laminate 50.

### Binder Removal Process

In the embodiment, the binder removal process in which the binder removal treatment removing the binder is carried out with respect to the laminate 50 that is obtained by repeatedly performing a series of processes including the layer forming process (first pattern forming process and second pattern forming process) and solvent removal process (refer to Fig. 8). Accordingly, the binder removed body 70 is obtained. Since such a binder removed body 70 is obtained, it is possible to more appropriately perform the subsequent sintering process (bonding process).

In the laminate 50 to be subjected in the binder removal process, since the content percentage of the solvent is sufficiently low by the solvent removal process, it is possible to more effectively prevent the laminate 50 from unwillingly deforming (for example, deforming along with the rapid volatilization of the solvent) in the binder removal process.

In addition, for example, it is possible to more effectively prevent the binder or decomposition product thereof from unwillingly remaining in the finally obtained three-dimensional modeled-object 10 by the binder removal process.

In the specification, the binder removed body refers to an object obtained by carrying out a treatment (binder removal treatment) for removing the binder with respect to the formed body (laminate 50) that is formed to have a predetermined shape. In the binder removal treatment, as long as at least some of the binders among the binders contained in the formed body (laminate 50) may be removed, some of the binders may remain in the binder removed body 70.

The binder removal treatment may be performed using any method, as long as the binder contained in the laminate 50 is removed by the method. The binder removal treatment may be carried out by performing a heat treatment in an oxidizing atmosphere or a non-oxidizing atmosphere. Examples of the oxidizing atmosphere include an atmosphere containing oxygen, nitric acid gas, or the like. Examples of the non-oxidizing atmosphere include an atmosphere under vacuum or pressure-reduced state (for example, 1.33×10⁻⁴ Pa to 13.3 Pa) or an atmosphere containing gas such as nitrogen gas and argon gas.

A treatment temperature in the binder removal process (heat treatment) is not particularly limited. The treatment temperature is preferably 100°C to 750°C, and more preferably 150°C to 600°C.

Accordingly, it is possible to more certainly prevent the laminate 50 and the binder removed body 70 from unwillingly deforming in the binder removal process, and more efficiently proceed the binder removal treatment. As a result, it is possible to manufacture the three-dimensional modeled-object 10, that is excellent and dimensional accuracy, with excellent productivity.

A treatment time (heat treatment time) in the binder removal process (heat treatment) is preferably half hour to 20 hours, and more preferably one hour to 10 hours.

Accordingly, it is possible to further improve the productivity of the three-dimensional modeled-object 10. In addition, it is possible to sufficiently lower a residual ratio of the binder in the binder removed body 70, and further improve the reliability of the finally obtained three-dimensional modeled-object 10 from excessively increasing.

The binder removal by the heat treatment may be performed in a plurality of processes (steps) for various purpose (for example, purpose of reducing the treatment time). In this case, a method in which the first half of the heat treatment is performed at a low temperature and the second half of the heat treatment is performed at a high temperature or a method in which the heat treatment is repeatedly performed at a low temperature and a high temperature may be used.

### Sintering Process (Bonding Process)

In the embodiment, the sintering process as the bonding process in which the bonding treatment is carried out for bonding the particles contained in the binder removed body 70 that is obtained in the binder removal process is included.

Accordingly, the bonded section (entity section) 2 is formed by bonding (sintering) the particles contained in the binder removed body 70 to manufacture the three-dimensional modeled-object 10 as a sintered body (refer to Fig. 9).

It is possible to obtain the three-dimensional modeled-object 10 that has a structure in which the particles are firmly bonded and has particularly excellent physical property such as a mechanical strength, by forming the bonded section 2.

Even in a case where the binder remains in the binder removal process, it is possible to certainly remove the binder by the bonding treatment (sintering treatment). Therefore, it is possible to prevent the binder from unwillingly remaining in the three-dimensional modeled-object 10. It is possible to further enhance the reliability of the three-dimensional modeled-object 10.

In particular, in the embodiment, the bonding treatment is carried out with respect to the laminate (binder removed body 70) including the plurality of layers 1. In other words, in the embodiment, the bonding process in which the bonding treatment of bonding the particles is carried out is included after the series of processes are repeatedly performed.

Accordingly, it is possible to further improve the productivity of the three-dimensional modeled-object 10.

The sintering process is performed by heating treatment.

The heating in the sintering process is preferably performed at a temperature that is equal to or lower than a melting point of the constituent material of the particle constituting the binder removed body 70.

Accordingly, it is possible to more efficiently bond the particles without distortion in the shape of the laminate.

The heating treatment in the sintering process is usually performed at a temperature that is higher than that of the heating treatment in the binder removal process.

When the melting point of the constituent material of the particle is represented by Tm [°C], the heating temperature in the sintering process is preferably (Tm-200)°C to (Tm-50)°C and more preferably (Tm-150)°C to (Tm-70)°C.

Accordingly, it is possible to more efficiently bond the particles by the heating treatment in a shorter time, and more effectively prevent the binder removed body 70 from unwillingly deforming in the sintering process. It is possible to further improve the dimensional accuracy of the three-dimensional modeled-object 10.

In a case where the particle contains a plurality of components, as the melting point, a melting point of a component with the highest content may be adopted.

The heating time in the sintering process is not particularly limited. The heating time is preferably 30 minutes to five hours, and more preferably one hour to three hours.

Accordingly, it is possible to more effectively prevent the unwilling deformation in the sintering process, while the bonding of the particles sufficiently proceeds. The mechanical strength and the dimensional accuracy of the three-dimensional modeled-object 10 can be compatible at a high level, and it is possible to further improve the productivity of the three-dimensional modeled-object 10.

An atmosphere at the time of sintering treatment is not particularly limited. For example, the sintering treatment may be performed in a non-oxidizing atmosphere, for example, an atmosphere under vacuum or pressure-reduced state (for example, 1.33×10⁻⁴ Pa to 133 Pa), an atmosphere containing inert gas such as nitrogen gas and argon gas, or as necessary, an atmosphere containing reducing gas such as hydrogen gas.

In addition, the sintering process may be performed by dividing into two or more steps. Accordingly, it is possible to improve the efficiency of the sintering, and perform the sintering (calcining) in a shorter treatment period of time.

In addition, the sintering process may be performed continuously with the binder removal process.

Accordingly, the binder removal process can also serve as a preprocessing of sintering to warm up the binder removed body 70. Therefore, it is possible to more certainly sinter the binder removed body 70.

In addition, the sintering process may be performed in a plurality of processes (steps) for various purpose (for example, purpose of reducing the calcining time). In this case, a method in which the first half of the calcining process is performed at a low temperature and the second half of the calcining process is performed at a high temperature or a method in which the calcining process is repeatedly performed at a low temperature and a high temperature may be used.

### Support Section Removal Process

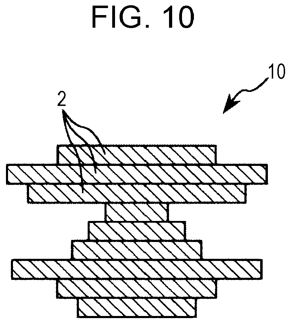

Then, as a post-processing, a support section 5 (first pattern 1A formed in the first pattern forming process) is removed. Accordingly, the three-dimensional modeled-object 10 is extracted (refer to Fig. 10).

Examples of a specific method used in the support section removal process include: a method in which a supporting material 5 is mechanically destroyed; a method in which the supporting material 5 is chemically decomposed; a method in which the supporting material 5 is dissolved; a method in which the support section 5 is removed by a brush or the like; a method in which the support section 5 is removed by suction; a method in which gas such as air is blowed; a method in which liquid such as water is applied (for example, a method in which a composite of the obtained support section 5 and binder removed body 70 is immersed in liquid and a method in which liquid is spouted); and a method in which vibration such as ultrasonic vibration is applied. In addition, two or more methods selected therefrom may be performed in combination.

In a case where the support section removal process is carried out before the sintering process, it is also possible to carry out the sintering process in a state of being buried in a powdery supporting material.

According to the manufacturing method, it is possible to efficiently manufacture the three-dimensional modeled-object 10 that is excellent in the dimensional accuracy and reliability.

The manufacturing method of the three-dimensional modeled-object 10 is summarized as those in Fig. 11.

### Three-Dimensional Modeled-Object Manufacturing Composition

Next, the three-dimensional modeled-object manufacturing composition according to an embodiment of the invention will be described.

In a case where, a plurality of kinds of three-dimensional modeled-object manufacturing compositions are used for manufacturing the three-dimensional modeled-object, at least one three-dimensional modeled-object manufacturing composition may be the three-dimensional modeled-object manufacturing composition according to the embodiment of the invention (that is, the composition includes the plurality of particles and the solvent (dispersion medium) dispersing the particles, in which the viscosity η1 at the shear rate of 10 s⁻¹ at 25°C is 6,000 mPa·s or higher and the viscosity η2 at the shear rate of 1,000 s⁻¹ at 25°C is 5,000 mPa·s or lower).

Accordingly, it is possible to manufacture the three-dimensional modeled-object excellent in the dimensional accuracy.

In the embodiment, the entity section forming composition 1B' and support section forming composition 1A' are used as the three-dimensional modeled-object manufacturing composition.

### Entity Section Forming Composition

First, the entity section forming composition 1B' as the three-dimensional modeled-object manufacturing composition used for manufacturing the three-dimensional modeled-object 10 will be described.

As long as the entity section forming composition 1B' is used for forming (forming the second pattern 1B) the entity section 2, the constituent component or the like thereof is not particularly limited. It is preferable that the composition 1B' include the plurality of particles and the solvent dispersing the particles. It is more preferable that the viscosity η1 at a shear rate of 10 s⁻¹ at 25°C be 6,000 mPa·s or higher and the viscosity η2 at the shear rate of 1,000 s⁻¹ at 25°C be 5,000 mPa·s or lower.

In the following description, a case where the entity section forming composition 1B' is the three-dimensional modeled-object manufacturing composition according to an embodiment of the invention will be described. That is, a case of the three-dimensional modeled-object manufacturing composition 1B' including a plurality of particles and the solvent dispersing the particles, in which the viscosity η1 at a shear rate of 10 s⁻¹ at 25°C is 6,000 mPa·s or higher and the viscosity η2 at the shear rate of 1,000 s⁻¹ at 25°C is 5,000 mPa·s or lower will be mainly described.

### Particle

Since the entity section forming composition 1B' includes the plurality of particles, it is possible to select the constituent material of the three-dimensional modeled-object 10 in a wide range. It is possible to appropriately obtain the three-dimensional modeled-object 10 having the desired physical property, quality, and the like. For example, in a case where the three-dimensional modeled-object is manufactured using a material that is dissolved in the solvent, although a material to be used is limited, it is possible to solve the limit by using the entity section forming composition 1B' including the particles.

Examples of the constituent material of the particle contained in the entity section forming composition 1B' include a metal material, a metal compound (such as ceramics), a resin material, and pigment.

The entity section forming composition 1B' preferably includes particles formed of a material that contains at least one of a metal material and a ceramic material.

Accordingly, for example, it is possible to further improve a quality (image of high-quality), mechanical strength, durability, and the like of the three-dimensional modeled-object 10. In addition, in general, the materials have a sufficient stability of the shape at a decomposition temperature of the binder to be described. Therefore, in the manufacturing processes for the three-dimensional modeled-object 10, it is possible to certainly remove the binder and more certainly prevent the binder from remaining in the three-dimensional modeled-object 10. In addition, it is possible to more reliably improve the dimensional accuracy of the three-dimensional modeled-object 10.

In particular, when the particle is formed of a material containing the metal material, the image of high-quality, massive feeling, the mechanical strength, and toughness and the like of the three-dimensional modeled-object 10 are further improved. In addition, when energy for bonding the particles is applied, a heat transmission efficiently proceeds. Therefore, it is possible to improve the productivity of the three-dimensional modeled-object 10 and more effectively prevent an unwilling variation in temperature from occurring. It is possible to further improve the reliability of the three-dimensional modeled-object 10.

Examples of the metal material constituting the particle include magnesium, iron, copper, cobalt, titanium, chromium, nickel, aluminum, and alloy containing at least one thereof (for example, maraging steel, stainless steel, cobalt chromium molybdenum, titanium alloy, nickel-based alloy, and aluminum alloy).

Examples of the metal compound constituting the particle include various metal oxides such as silica, alumina, titanium oxide, zinc oxide, zirconium oxide, tin oxide, magnesium oxide, and potassium titanate; various metal hydroxides such as magnesium hydroxide, aluminum hydroxide, and calcium hydroxide; various metal nitrides such as silicon nitride, titanium nitride, and aluminum nitride; various metal carbides such as silicon carbide and titanium carbide; various metal sulfides such as zinc sulfide; carbonates of various metals such as calcium carbonate and magnesium carbonate; sulfates of various metals such as calcium sulfate and magnesium sulfate; silicates of various metals such as calcium silicate and magnesium silicate; phosphates of various metals such as calcium phosphate; borates of various metals such as aluminum borate and magnesium borate; and a composite thereof.

Examples of the resin material constituting the particle include polybutylene terephthalate, polyethylene terephthalate, polypropylene, polystyrene, syndiotactic polystyrene, polyacetal, modified polyphenylene ether, polyether ether ketone, polycarbonate, acrylonitrile-butadiene-styrene copolymer (ABS resin), polyether nitrile, polyamide (such as nylon), polyarylate, polyamide imide, polyether imide, polyimide, liquid crystal polymer, polysulfone, polyethersulfone, polyphenylene sulfide, and fluororesin.

The shape of the particle is not limited. Any shape of a spherical shape, a spindle shape, a needle shape, a cylindrical shape, a scale shape, and the like may be adopted. In addition, the shape of the particle may be an amorphous shape. However, it is preferable that the particle have the spherical shape.

An average particle diameter (D50) of the particle is not particularly limited. However, the average particle diameter is preferably 0.1 µm to 20 µm, and more preferably 0.2 µm to 10 µm.

Accordingly, the entity section forming composition 1B' satisfying the conditions of the viscosities η1 and η2 is easily prepared. It is possible to more appropriately bond the particles in the bonding process. In addition, it is possible to efficiently remove the solvent or the binder contained in the layer 1. It is possible to more effectively prevent the constituent material other than the particles from unwillingly remaining in the finally obtained three-dimensional modeled-object 10. Therefore, it is possible to further improve the dimensional accuracy, the mechanical strength, and the reliability of the manufactured three-dimensional modeled-object 10, while further improving the productivity of the three-dimensional modeled-object 10.

In the embodiment of the invention, the average particle diameter refers to an average particle diameter on the basis of a volume. For example, a sample is added to methanol and dispersed for three minutes with an ultrasonic disperser. The average particle diameter can be obtained by analyzing a dispersion liquid that is obtained by adding a sample to methanol and dispersing for three minutes with an ultrasonic disperser, in a particle size distribution analyzer using a coulter counter method (TA-II type, manufactured by Coulter Electronics, Inc.) with an aperture of 50 µm.

The maximum diameter Dmax of the particle is preferably 50 µm or smaller, more preferably 0.2 µm to 25 µm, and still more preferably 0.4 µm to 15 µm.

Accordingly, the entity section forming composition 1B' satisfying the conditions of the viscosities η1 and η2 is easily prepared. It is possible to more appropriately bond the particles in the bonding process. Therefore, it is possible to further improve the dimensional accuracy and the reliability of the manufactured three-dimensional modeled-object 10, while further improving the productivity of the three-dimensional modeled-object 10.

A content percentage of the particles in the entity section forming composition 1B' is preferably 50 volume% or lower, more preferably 25 volume% to 48 volume%, and still more preferably 30 volume% to 45 volume%.

Accordingly, the entity section forming composition 1B' satisfying the conditions of the viscosities η1 and η2 is easily prepared. It is possible to more reliably improve the dimensional accuracy and the reliability of the three-dimensional modeled-object 10. In addition, it is possible to more stably perform discharging of the entity section forming composition 1B' for a long period. More specifically, even in a case where a plurality of liquid droplets is discharged, it is possible to prevent the particles and solvent in the discharged entity section forming composition 1B' from unwillingly being separated. It is possible to more effectively prevent the unwilling variation of composition in the formed pattern from occurring.

The particle is formed of a material having a chemical reaction (for example, oxidation reaction) in the manufacturing processes (for example, bonding process) of the three-dimensional modeled-object 10. The composition of the particle contained in the entity section forming composition 1B' may be different from the composition of the constituent material of the finally obtained three-dimensional modeled-object 10.

In addition, the entity section forming composition 1B' may contain two or more kinds of particle.

### Solvent

Since the entity section forming composition 1B' contains the solvent (dispersion medium), it is possible to appropriately disperse the particles in the entity section forming composition 1B'. It is possible to stably perform discharging of the entity section forming composition 1B' by the dispenser or the like.

The solvent is not particularly limited as long as the solvent has a function of dispersing the particles (function as a dispersion medium) in the entity section forming composition 1B'. Examples of the solvent include water; ethers such as ethylene glycol monomethyl ether, ethylene glycol monoethyl ether, propylene glycol monomethyl ether, propylene glycol monoethyl ether, diethyl diglycol, diethylene glycol monobutyl ether acetate, and diethylene glycol monoethyl ether; acetates such as ethyl acetate, n-propyl acetate, isopropyl acetate, n-butyl acetate, and iso-butyl acetate; carbitols such as carbitol and an ester compound thereof (for example, carbitol acetate); cellosolves such as cellosolve and an ester compound thereof (for example, cellosolve acetate); aromatic hydrocarbons such as benzene, toluene, and xylene; ketones such as methyl ethyl ketone, acetone, methyl isobutyl ketone, ethyl-n-butyl ketone, diisopropyl ketone, and acetylacetone; alcohols such as monohydric alcohols such as ethanol, propanol, and butanol, and polyhydric alcohols such as ethylene glycol, propylene glycol, butanediol, and glycerin; sulfoxide-based solvents such as dimethyl sulfoxide and diethyl sulfoxide; pyridine-based solvents such as pyridine, picoline (α-picoline, β-picoline, and γ-picoline), and 2,6- lutidine; and ionic liquid such as tetraalkylammonium acetate (for example, tetrabutylammonium acetate). One kind of solvent selected therefrom may be used and two or more kinds of solvent selected therefrom may be used in combination.

Among these, it is preferable that the solvent include at least one of ethers and polyhydric alcohols.

Accordingly, the entity section forming composition 1B' satisfying the conditions of the viscosities η1 and η2 is easily prepared. In a case where the entity section forming composition 1B' contains a component to be exemplified as the binder, this tendency is more remarkably exhibited.

The content percentage of the solvent in the entity section forming composition 1B' is preferably 5 mass% to 68 mass% and more preferably 8 mass% to 60 mass%.

Accordingly, the entity section forming composition 1B' satisfying the conditions of the viscosities η1 and η2 is easily prepared. It is possible to effectively prevent the time required for the solvent removal process from being longer than needed. It is possible to further improve the productivity of the three-dimensional modeled-object 10. In addition, it is also advantageous in view of production cost, resource saving, and the like.

### Binder

The binder (binding material) has the function of temporarily binding the particles in a state where the solvent is removed.

Since the entity section forming composition 1B' contains the binder, it is possible to more effectively prevent the second pattern 1B formed using the entity section forming composition 1B' from unwillingly deforming. It is possible to further improve the dimensional accuracy of the three-dimensional modeled-object 10.

As the binder, for example, various resin materials such as thermoplastic resin and curable resin may be used.

In a case where the entity section forming composition 1B' contains the curable resin, a curing reaction of the curable resin may be performed at a timing after the discharging of the entity section forming composition 1B' and before the bonding process.

Accordingly, it is possible to more effectively prevent the pattern formed using the entity section forming composition 1B' from unwillingly deforming. It is possible to further improve the dimensional accuracy of the three-dimensional modeled-object 10.

A curing treatment by which the curing reaction of the curable resin proceeds can be performed by applying heat or radiating with energy ray such as ultraviolet ray.

As the curable resin, for example, various thermosetting resin, photocurable resin, and the like can be appropriately used.

As the curable resin (polymerizable compound), for example, various monomers, oligomers (including dimer, trimer, and the like), and prepolymers can be used.

As the curable resin (polymerizable compound), a curable resin in which addition polymerization or ring-opening polymerization is initiated by radicals, cations, or the like generated by polymerization initiator by radiating with energy ray to form a polymer is preferably used. Examples of a polymerization mechanism of the addition polymerization include radical, cation, anion, metathesis, and coordination polymerization. Examples of a polymerization mechanism of the ring-opening polymerization include cation, anion, radical, metathesis, and coordination polymerization.

The binder may be contained in the entity section forming composition 1B' in any form. However, it is preferable to form a liquid state (for example, a molten state and dissolved state). That is, it is preferable that the binder be contained as the constituent component of the dispersion medium.

Accordingly, the binder is possible to function as the dispersion medium that disperses the particles. It is possible to further improve preservability of the entity section forming composition 1B'.

Specific examples of the binder are as follows. As acrylic resin, acrylic (methacrylic) resin, urethane-modified acrylic resin, epoxy-modified acrylic resin, silicone-modified acrylic resin, and alkyd-modified acrylic resin are exemplified. As polyester-based resin, polyester resins such as polyethylene terephthalate (PET), polybutylene terephthalate (PBT), and polyethylene naphthalate (PEN), acrylic-modified polyester resin, glycol-modified polyester, urethane-modified copolyester, epoxy-modified polyester, and silicone-modified polyester resin are exemplified. As epoxy-based resin, epoxy resin, urethane-modified epoxy resin, silicone-modified epoxy resin, and acrylic-modified epoxy resin are exemplified. As silicone-based resin, silicone resin, acrylic-modified silicone resin, and epoxy-modified silicone resin are exemplified. In addition, polyvinyl alcohol (PVA), polylactic acid (PLA), polyamide (PA), polyphenylene sulfide (PPS), and the like are exemplified.

In particular, it is preferable that the entity section forming composition 1B' include acrylic resin and polyester as the binder.

Accordingly, it is possible to lower the viscosity η2 of the entity section forming composition 1B' while increasing the viscosity η1 of the entity section forming composition 1B'. It is possible to further improve both the discharging property of the entity section forming composition 1B' using the discharge method and the stability of the shape of the pattern formed using the discharge method. Accordingly, it is possible to further improve the dimensional accuracy of the three-dimensional modeled-object 10. In addition, the binder is excellent in solubility in the solvent and is possible to further improve the preservability of the entity section forming composition 1B'. The binder is possible to more effectively prevent the unwilling variation of composition in the entity section forming composition 1B' from occurring.

In a case where the entity section forming composition 1B' contains the acrylic resin and the polyester as the binder, the content of the polyester in the entity section forming composition 1B' is preferably 10 parts by mass to 1,000 parts by mass, more preferably 20 parts by mass to 500 parts by mass, and still more preferably 25 parts by mass to 400 parts by mass, with respect to 100 parts by mass of acrylic resin.

Accordingly, it is possible to further lower the viscosity η2 of the entity section forming composition 1B' while further increasing the viscosity η1 of the entity section forming composition 1B'. It is possible to further improve both the discharging property of the entity section forming composition 1B' using the discharge method and the stability of the shape of the pattern formed using the discharge method. Accordingly, it is possible to further improve the dimensional accuracy of the three-dimensional modeled-object 10.

In a case where the entity section forming composition 1B' contains the polyester as the binder, a hydroxyl value of the polyester is preferably 10 KOHmg/g to 60 KOHmg/g, more preferably 15 KOHmg/g to 55 KOHmg/g, and still more preferably 20 KOHmg/g to 50 KOHmg/g.

Accordingly, it is possible to further lower the viscosity η2 of the entity section forming composition 1B' while further increasing the viscosity η1 of the entity section forming composition 1B'. It is possible to further improve both the discharging property of the entity section forming composition 1B' using the discharge method and the stability of the shape of the pattern formed using the discharge method. In addition, it is possible to further improve the dimensional accuracy of the three-dimensional modeled-object 10.

The content percentage of the binder in the entity section forming composition 1B' is preferably 5.0 volume% or higher, more preferably 7.0 volume% to 25 volume%, and still more preferably 8.0 volume% to 20 volume%.

Accordingly, the function of temporarily binding the particles is more effectively exhibited, and it is possible to more effectively prevent the binder or decomposition product thereof from unwillingly remaining in the finally obtained three-dimensional modeled-object 10. For example, it is possible to more reliably prevent the carbon content in the three-dimensional modeled-object 10 from unwillingly increasing. In addition, the entity section forming composition 1B' satisfying the conditions of the viscosities η1 and η2 is easily prepared. It is possible to further improve the productivity of the three-dimensional modeled-object 10.

As the binder, nanocellulose may also be used.

In this specification, the nonocellulose refers to a fibrous substance that is formed of cellulose or derivative of cellulose and has width and thickness of 100 nm or less. That is, the nanocellulose has meaning of including cellulose nanofibers and cellulose nanocrystals.

### Other Components

In addition, the entity section forming composition 1B' may include other components in addition to the component described above. Examples of other components include a polymerization initiator, dispersing agent, a surfactant, a thickening agent, an aggregation inhibitor, an antifoaming agent, a slipping agent (leveling agent), dye, a polymerization inhibitor, a polymerization accelerator, a permeation accelerator, a wetting agent (humectant), a fixing agent, an antifungal agent, a preservative, an antioxidant, an ultraviolet absorber, a chelating agent, and a pH adjuster.

### Support Section Forming Composition

Next, the support section forming composition 1A' as the three-dimensional modeled-object manufacturing composition used for manufacturing the three-dimensional modeled-object 10 will be described.

As long as the support section forming composition 1A' is used for forming (forming the first pattern 1A) the support section 5, the constituent component or the like thereof is not particularly limited. It is preferable that the composition 1A' include the plurality of particles and the solvent dispersing the particles. It is more preferable that the viscosity η1 at a shear rate of 10 s⁻¹ at 25°C be 6,000 mPa·s or higher and the viscosity η2 at the shear rate of 1,000 s⁻¹ at 25°C be 5,000 mPa·s or lower.

In the following description, a case where the support section forming composition 1A' is the three-dimensional modeled-object manufacturing composition according to the embodiment of the invention will be described. That is, a case of the three-dimensional modeled-object manufacturing composition including a plurality of particles and the solvent dispersing the particles, in which the viscosity η1 at a shear rate of 10 s⁻¹ at 25°C is 6,000 mPa·s or higher and the viscosity η2 at the shear rate of 1,000 s⁻¹ at 25°C is 5,000 mPa·s or lower will be mainly described.

### Particle

Since the support section forming composition 1A' contains the plurality of particles, even in a case where the support section 5 to be formed (first pattern 1A) has a fine shape, it is possible to efficiently form the support section 5 with the high dimensional accuracy. In addition, it is possible to efficiently remove the solvent or binder (including decomposition product) from a space between the plurality of particles constituting the support section 5. It is possible to further improve the productivity of the three-dimensional modeled-object 10. In addition, it is possible to more effectively prevent the solvent, the binder, or the like from unwillingly remaining in the binder removed body 70. It is possible to further improve the reliability of the finally obtained three-dimensional modeled-object 10.

Examples of the constituent material of the particle contained in the support section forming composition 1A' include the same material as those of the constituent material of the entity section forming composition 1B'. Accordingly, the same effects are obtained.

It is preferable that the particle constituting the support section forming composition 1A' be formed of a material having a melting point higher than that of the particle constituting the entity section forming composition 1B'.

The shape of the particle is not limited. Any shape of a spherical shape, a spindle shape, a needle shape, a cylindrical shape, a scale shape, and the like may be adopted. In addition, the shape of the particle may be an amorphous shape. However, it is preferable that the particle have the spherical shape.

An average particle diameter of the particle is not particularly limited. However, the average particle diameter is preferably 0.1 µm to 20 µm, and more preferably 0.2 µm to 10 µm.

Accordingly, the support section forming composition 1A' satisfying the conditions of the viscosities η1 and η2 is easily prepared. In addition, it is possible to efficiently remove the solvent or the binder contained in the layer 1. It is possible to more effectively prevent the constituent material other than the particles from unwillingly remaining in the finally obtained three-dimensional modeled-object 10. Therefore, it is possible to further improve the dimensional accuracy and the reliability of the manufactured three-dimensional modeled-object 10, while further improving the productivity of the three-dimensional modeled-object 10.

The maximum diameter Dmax of the particle is preferably 50 µm or smaller, more preferably 0.2 µm to 25 µm, and still more preferably 0.4 µm to 15 µm.

Accordingly, the support section forming composition 1A' satisfying the conditions of the viscosities η1 and η2 is easily prepared. It is possible to further improve the dimensional accuracy and the reliability of the manufactured three-dimensional modeled-object 10, while further improving the productivity of the three-dimensional modeled-object 10.

A content percentage of the particles in the support section forming composition 1A' is preferably 50 volume% or lower, more preferably 25 volume% to 48 volume%, and still more preferably 30 volume% to 45 volume%.

Accordingly, the support section forming composition 1A' satisfying the conditions of the viscosities η1 and η2 is easily prepared. It is possible to more reliably improve the dimensional accuracy and the reliability of the three-dimensional modeled-object 10. In addition, it is possible to more stably perform discharging of the support section forming composition 1A' for a long period. More specifically, even in a case where a plurality of liquid droplets is discharged, it is possible to prevent the particles and solvent in the discharged support section forming composition 1A' from unwillingly being separated. It is possible to more effectively prevent the unwilling variation of composition in the formed pattern from occurring.

The particle is formed of a material having a chemical reaction (for example, oxidation reaction) in the manufacturing processes of the three-dimensional modeled-object 10.

In addition, the support section forming composition 1A' may contain two or more kinds of particle.

### Solvent

Since the support section forming composition 1A' contains the solvent, it is possible to appropriately disperse the particles in the support section forming composition 1A'. It is possible to stably perform discharging of the support section forming composition 1A' by the dispenser or the like.

Examples of the solvent contained in the support section forming composition 1A' include the same solvent as those of the constituent material of the entity section forming composition 1B'. Accordingly, the same effects are obtained.

The composition of the solvent contained in the support section forming composition 1A' may be the same as or different from the composition of the solvent contained in the entity section forming composition 1B'.

The content percentage of the solvent in the support section forming composition 1A' is preferably 5 mass% to 68 mass% and more preferably 8 mass% to 60 mass%.

Accordingly, the support section forming composition 1A' satisfying the conditions of the viscosities η1 and η2 is easily prepared. It is possible to effectively prevent the time required for the solvent removal process from being longer than needed. It is possible to further improve the productivity of the three-dimensional modeled-object 10. In addition, it is also advantageous in view of production cost, resource saving, and the like.

### Binder

Since the support section forming composition 1A' contains the binder, it is possible to effectively prevent the first pattern 1A formed using the support section forming composition 1A' from unwillingly deforming. It is possible to further improve the dimensional accuracy of the three-dimensional modeled-object 10.

As the binder, for example, various resin materials such as thermoplastic resin and curable resin may be used.

In a case where the support section forming composition 1A' contains the curable resin, a curing reaction of the curable resin may be performed at a timing after the discharging of the support section forming composition 1A' and before the bonding process.

Accordingly, it is possible to more effectively prevent the pattern formed using the support section forming composition 1A' from unwillingly deforming. It is possible to further improve the dimensional accuracy of the three-dimensional modeled-object 10.

A curing treatment by which the curing reaction of the curable resin proceeds can be performed by applying heat or radiating with energy ray such as ultraviolet ray.

In a case where the support section forming composition 1A' contains the curable resin, for example, the same material as those described as the constituent component of entity section forming composition 1B' can be used as the curable resin.

The curable resin contained in the support section forming composition 1A' and the curable resin contained in the entity section forming composition 1B' may have the same condition (for example, the same composition) and may have different conditions.

The binder may be contained in the support section forming composition 1A' in any form. However, it is preferable to form a liquid state (for example, a molten state and dissolved state). That is, it is preferable that the binder be contained as the constituent component of the dispersion medium.

Accordingly, the binder is possible to function as the dispersion medium that disperses the particles. It is possible to further improve the preservability of the support section forming composition 1A'.

Specific examples of the binder are as follows. As acrylic resin, acrylic (methacrylic) resin, urethane-modified acrylic resin, epoxy-modified acrylic resin, silicone-modified acrylic resin, and alkyd-modified acrylic resin are exemplified. As polyester-based resin, polyester resins such as polyethylene terephthalate (PET), polybutylene terephthalate (PBT), and polyethylene naphthalate (PEN), acrylic-modified polyester resin, glycol-modified polyester, urethane-modified copolyester, epoxy-modified polyester, and silicone-modified polyester resin are exemplified. As epoxy-based resin, epoxy resin, urethane-modified epoxy resin, silicone-modified epoxy resin, and acrylic-modified epoxy resin are exemplified. As silicone-based resin, silicone resin, acrylic-modified silicone resin, and epoxy-modified silicone resin are exemplified. In addition, polyvinyl alcohol (PVA), polylactic acid (PLA), polyamide (PA), polyphenylene sulfide (PPS), and the like are exemplified.

In particular, it is preferable that the support section forming composition 1A' include acrylic resin and polyester as the binder.

Accordingly, it is possible to lower the viscosity η2 of the support section forming composition 1A' while increasing the viscosity η1 of the support section forming composition 1A'. It is possible to further improve both the discharging property of the support section forming composition 1A' using the discharge method and the stability of the shape of the pattern formed using the discharge method. Accordingly, it is possible to further improve the dimensional accuracy of the three-dimensional modeled-object 10. In addition, the binder is excellent in solubility in the solvent and is possible to further improve the preservability of the support section forming composition 1A'. The binder is possible to more effectively prevent the unwilling variation of the composition in the support section forming composition 1A' from occurring.

In a case where the support section forming composition 1A' contains the acrylic resin and the polyester as the binder, the content of the polyester in the support section forming composition 1A' is preferably 10 parts by mass to 1,000 parts by mass, more preferably 20 parts by mass to 500 parts by mass, and still more preferably 25 parts by mass to 400 parts by mass, with respect to 100 parts by mass of acrylic resin.

Accordingly, it is possible to further lower the viscosity η2 of the support section forming composition 1A' while further increasing the viscosity η1 of the support section forming composition 1A'. It is possible to further improve both the discharging property of the support section forming composition 1A' using the discharge method and the stability of the shape of the pattern formed using the discharge method. Accordingly, it is possible to further improve the dimensional accuracy of the three-dimensional modeled-object 10.

In a case where the support section forming composition 1A' contains the polyester as the binder, a hydroxyl value of the polyester is preferably 10 KOHmg/g to 60 KOHmg/g, more preferably 15 KOHmg/g to 50 KOHmg/g, and still more preferably 20 KOHmg/g to 40 KOHmg/g.

Accordingly, it is possible to further lower the viscosity η2 of the support section forming composition 1A' while further increasing the viscosity η1 of the support section forming composition 1A'. It is possible to further improve both the discharging property of the support section forming composition 1A' using the discharge method and the stability of the shape of the pattern formed using the discharge method. In addition, it is possible to further improve the dimensional accuracy of the three-dimensional modeled-object 10.

The content percentage of the binder in the support section forming composition 1A' is preferably 5.0 volume% or higher, more preferably 7.0 volume% to 25 volume%, and still more preferably 8.0 volume% to 20 volume%.

Accordingly, the function of temporarily binding the particles is more effectively exhibited, and it is possible to more effectively prevent the binder or decomposition product thereof from unwillingly remaining in the finally obtained three-dimensional modeled-object 10. For example, it is possible to more reliably prevent the carbon content in the three-dimensional modeled-object 10 from unwillingly increasing. In addition, the support section forming composition 1A' satisfying the conditions of the viscosities η1 and η2 is easily prepared. It is possible to further improve the productivity of the three-dimensional modeled-object 10.

As the binder, nanocellulose may also be used.

### Other Components

In addition, the support section forming composition 1A' may include other components in addition to the component described above. Examples of other components include a polymerization initiator, dispersing agent, a surfactant, a thickening agent, an aggregation inhibitor, an antifoaming agent, a slipping agent (leveling agent), dye, a polymerization inhibitor, a polymerization accelerator, a permeation accelerator, a wetting agent (humectant), a fixing agent, an antifungal agent, a preservative, an antioxidant, an ultraviolet absorber, a chelating agent, and a pH adjuster.

### Three-Dimensional Modeled-Object Manufacturing Composition Set

Next, the three-dimensional modeled-object manufacturing composition set according to an embodiment of the invention will be described.

The three-dimensional modeled-object manufacturing composition set according to the embodiment of invention includes a plurality of kinds of compositions used for manufacturing the three-dimensional modeled-object. The three-dimensional modeled-object manufacturing composition set includes the three-dimensional modeled-object manufacturing composition according to the embodiment of the invention (the composition includes the plurality of particles and the solvent dispersing the particles, in which the viscosity η1 at a shear rate of 10 s⁻¹ at 25°C is 6,000 mPa·s or higher and the viscosity η2 at the shear rate of 1,000 s⁻¹ at 25°C is 5,000 mPa·s or lower) as at least one kind of the plurality kinds of composition.

Accordingly, it is possible to provide the three-dimensional modeled-object manufacturing composition set which can be used for manufacturing a three-dimensional modeled-object, that is excellent in dimensional accuracy and reliability, with excellent productivity.

The three-dimensional modeled-object manufacturing composition set may include at least one kind of the three-dimensional modeled-object manufacturing composition according to the embodiment of the invention. However, it is preferable that the three-dimensional modeled-object manufacturing composition set include two or more kinds of the three-dimensional modeled-object manufacturing compositions according to the embodiment of the invention.

Accordingly, it is possible to further improve the dimensional accuracy and the reliability of the three-dimensional modeled-object.

In addition, it is preferable that the three-dimensional modeled-object manufacturing composition set include at least one kind of the entity section forming composition 1B' used for forming the entity section 2 of the three-dimensional modeled-object 10 and at least one kind of the support section forming composition 1A' used for forming the support section 5.

Accordingly, it is possible to further improve the dimensional accuracy and the reliability of the three-dimensional modeled-object 10.

### Three-Dimensional Modeled-Object Manufacturing Apparatus

Next, the three-dimensional modeled-object manufacturing apparatus will be described.

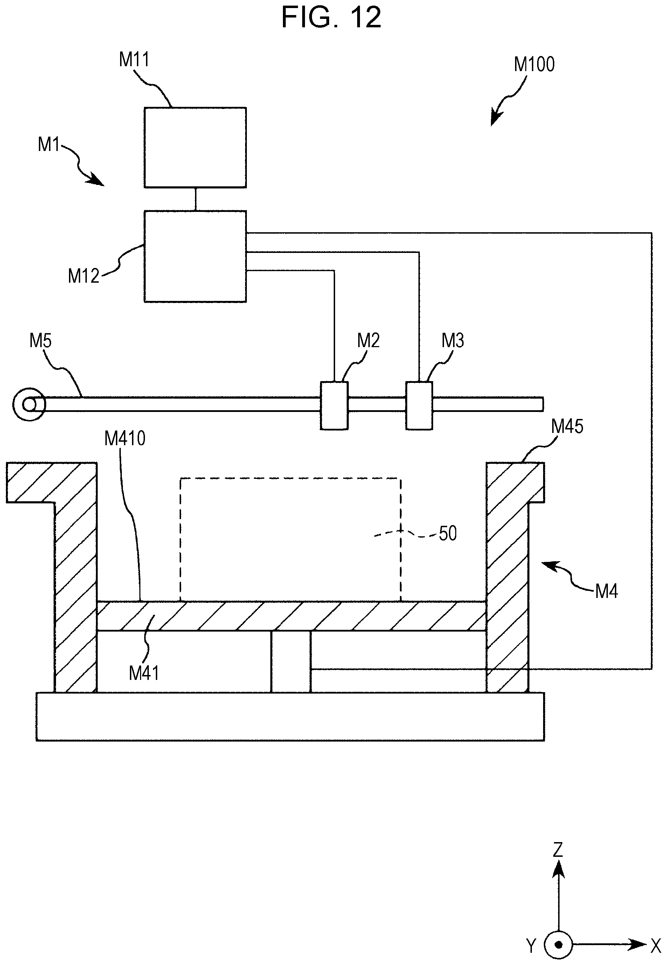

Fig. 12 is a side view schematically showing a three-dimensional modeled-object manufacturing apparatus according to a preferred embodiment.

The three-dimensional modeled-object manufacturing apparatus M100 includes a nozzle that discharges the three-dimensional modeled-object manufacturing composition according to the embodiment of the invention. The three-dimensional modeled-object manufacturing apparatus M100 forms the layer 1 by discharging the three-dimensional modeled-object manufacturing composition with the nozzle, thereby manufacturing the three-dimensional modeled-object 10 by stacking the layer 1.

More specifically, the three-dimensional modeled-object manufacturing apparatus M100 is an apparatus used for manufacturing the three-dimensional modeled-object 10 by repeating formation of the layer 1. The three-dimensional modeled-object manufacturing apparatus M100 includes a control unit (controller) M1, a support section forming composition discharging nozzle (first nozzle) M2 that discharges the support section forming composition 1A' (three-dimensional modeled-object manufacturing composition 1') used for forming the support section 5 that supports a portion to be the entity section 2 of the three-dimensional modeled-object 10, and an entity section forming composition discharging nozzle (second nozzle) M3 that discharges the entity section forming composition 1B' (three-dimensional modeled-object manufacturing composition 1') used for forming the entity section 2 of the three-dimensional modeled-object 10. At least one of the support section forming composition 1A' and entity section forming composition 1B' (preferably at least the entity section forming composition 1B', more preferably both of the support section forming composition 1A' and entity section forming composition 1B') is the three-dimensional modeled-object manufacturing composition according to the embodiment of the invention (the composition includes the plurality of particles and the solvent dispersing the particles, in which the viscosity η1 at a shear rate of 10 s⁻¹ at 25°C is 6,000 mPa·s or higher and the viscosity η2 at the shear rate of 1,000 s⁻¹ at 25°C is 5,000 mPa·s or lower).

Accordingly, the manufacturing method according to the embodiment of the invention can be appropriately executed. It is possible to manufacture the three-dimensional modeled-object 10, that is excellent in the dimensional accuracy and the reliability, with the excellent productivity.

The control unit M1 includes a computer M11 and a driving control unit M12.

The computer M11 is a general desktop computer or the like that is configured to include a CPU, a memory, and the like therein. The computer M11 creates data as model data, from the shape of the three-dimensional modeled-object 10 and outputs cross-sectional data (slice data) which is obtained by slicing the data into sectional thin bodies of parallel several layers to the driving control unit M12.

The driving control unit M12 included in the control unit M1 functions as a controller that drives each of the support section forming composition discharging nozzle M2, the entity section forming composition discharging nozzle M3, a layer forming unit M4, and the like. Specifically, for example, the driving control unit M12 controls: driving (such as moving on an X-Y plane)of the support section forming composition discharging nozzle M2 and entity section forming composition discharging nozzle entity section forming composition discharging nozzle M3; discharging of the support section forming composition 1A' with the support section forming composition discharging nozzle support section forming composition discharging nozzle M2; discharging of the entity section forming composition 1B' with the entity section forming composition discharging nozzle entity section forming composition discharging nozzle M3; lowering of the stage (elevation stage) M41 movable in a Z direction of Fig. 12; and an amount of lowering of the stage M41.

Each of the support section forming composition discharging nozzle M2 and entity section forming composition discharging nozzle M3 is connected to a pipe from a material storage unit (material supply unit) (not illustrated). The three-dimensional modeled-object manufacturing composition 1' is stored in the material supply unit. The three-dimensional modeled-object manufacturing composition 1' is discharged from the support section forming composition discharging nozzle M2 and entity section forming composition discharging nozzle M3 by control of the driving control unit M12.

The support section forming composition discharging nozzle M2 and entity section forming composition discharging nozzle M3 can move independently along a guide M5 in an X direction and Y direction of Fig. 12.

The layer forming unit M4 includes the stage (elevation stage) M41 supporting the layer 1 that is formed using the supplied support section forming composition 1A' and entity section forming composition 1B' and a frame body M45 surrounding the elevation stage M41.

When a new layer 1 is formed (stacked) on the previously formed layer 1, the elevation stage M41 is sequentially lowered (move toward a negative direction of Z-axis) by a predetermined amount, according to a command from the driving control unit M12.

An upper surface (in more detail, a portion to which the support section forming composition 1A' and the entity section forming composition 1B' are applied) of the stage M41 is the flat plane (liquid receiving surface) M410. Accordingly, it is possible to easily and reliably form the layer 1 with high thickness uniformity.

The stage M41 is preferably formed of a high-strength material. Examples of the constituent material of the stage M41 include various metal materials such as stainless steel.

In addition, the plane M410 of the stage M41 may be subjected to surface treatment. Accordingly, for example, it is possible to more effectively prevent the constituent material of the support section forming composition 1A' or the constituent material of the entity section forming composition 1B' from being firmly attached to the stage M41. Moreover, it is possible to improve durability of the stage M41 and achieve stable production of the three-dimensional modeled-object 10 over a long period of time. Examples of a material used for the surface treatment of the plane M410 of the stage M41 include fluorine-based resin such as polytetrafluoroethylene.

The support section forming composition discharging nozzle M2 moves according to the command from the driving control unit M12, and is configured to discharge the support section forming composition 1A' to the desired position on the stage M41 in a predetermined pattern.

Examples of the support section forming composition discharging nozzle M2 include an ink jet head nozzle and various dispenser nozzles. It is preferable that the support section forming composition discharging nozzle M2 be the dispenser nozzle (in particular, piston-type dispenser nozzle).

Accordingly, it is possible to appropriately apply the shear stress at the relatively high shear rate with respect to the support section forming composition 1A' to be discharged. Even in a case where the viscosity (for example, viscosity η1) at the static state is relatively high, it is possible to more effectively lower the viscosity when discharging and to more appropriately discharge the composition 1A'. Accordingly, it is possible to further improve the dimensional accuracy of the three-dimensional modeled-object 10. In addition, it is possible to easily form the layer 1 having the relatively large thickness and to further improve the productivity of the three-dimensional modeled-object 10.

A size (diameter of a nozzle) of a discharging part of the support section forming composition discharging nozzle M2 is not particularly limited. However, it is preferable that the size be 10 µm to 100 µm.

Accordingly, it is possible to further improve the productivity of the three-dimensional modeled-object 10 while further improving the dimensional accuracy of the three-dimensional modeled-object 10.

It is preferable that the support section forming composition discharging nozzle M2 discharge the support section forming composition 1A' as the liquid droplet. Accordingly, it is possible to apply the support section forming composition 1A' in a fine pattern. Even in a case where the three-dimensional modeled-object 10 has a fine structure, it is possible to manufacture the three-dimensional modeled-object 10 with particularly high dimensional accuracy and productivity.

The entity section forming composition discharging nozzle M3 moves according to the command from the driving control unit M12, and is configured to discharge the entity section forming composition 1B' to the desired position on the stage M41 in a predetermined pattern.

Examples of the entity section forming composition discharging nozzle M3 include a ink jet head nozzle and various dispenser nozzles. It is preferable that the entity section forming composition discharging nozzle M3 be the dispenser nozzle (in particular, piston-type dispenser nozzle).

Accordingly, it is possible to appropriately apply the shear stress at the relatively high shear rate with respect to the entity section forming composition 1B' to be discharged. Even in a case where the viscosity (for example, viscosity η1) at the static state is relatively high, it is possible to more effectively lower the viscosity when discharging and to more appropriately discharge the composition 1B'. Accordingly, it is possible to further improve the dimensional accuracy of the three-dimensional modeled-object 10. In addition, it is possible to easily form the layer 1 having the relatively large thickness and to further improve the productivity of the three-dimensional modeled-object 10.

A size (diameter of a nozzle) of a discharging part of the entity section forming composition discharging nozzle M3 is not particularly limited. However, it is preferable that the size be 10 µm to 100 µm.

Accordingly, it is possible to further improve the productivity of the three-dimensional modeled-object 10 while further improving the dimensional accuracy of the three-dimensional modeled-object 10.

It is preferable that the entity section forming composition discharging nozzle M3 discharge the entity section forming composition 1B' as the liquid droplet. Accordingly, it is possible to apply the entity section forming composition 1B' in a fine pattern. Even in a case where the three-dimensional modeled-object 10 has a fine structure, it is possible to manufacture the three-dimensional modeled-object 10 with particularly high dimensional accuracy and productivity.

According to the configuration, it is possible to obtain the laminate 50 by laminating the plurality of layers 1.

It is possible to obtain the three-dimensional modeled-object 10 by carrying out the binder removal treatment and bonding treatment (sintering treatment) with respect to the obtained laminate 50.

The three-dimensional modeled-object manufacturing apparatus M100 of the embodiment may include binder remover (not illustrated) that performs the binder removal treatment and bonding unit (sintering unit)(not illustrated) that performs the bonding treatment (sintering treatment).

Accordingly, it is possible to perform the forming of the layer 1 or the like together with the binder removal treatment and the bonding treatment in the same apparatus, and further improve the productivity of the three-dimensional modeled-object 10. Three-Dimensional Modeled-Object

The three-dimensional modeled-object according to the embodiment of the invention can be manufactured using the three-dimensional modeled-object manufacturing method according to the embodiment of the invention.

Accordingly, it is possible to manufacture the three-dimensional modeled-object, that is excellent dimensional accuracy and reliability, with excellent productivity.

A use of the three-dimensional modeled-object is not particularly limited. Examples thereof include an appreciation article or an exhibit such as a doll and a figure, and a medical device such as an implant.

In addition, the three-dimensional modeled-object may be applied to any of a prototype, a mass-produced product, and a custom-made product.

Hereinabove, the preferred embodiment of the invention is described. However, the embodiment of the invention is not limited thereto.

For example, in the embodiment, a case where the first pattern forming process is performed, and then the second pattern forming process is performed in a single layer is described. However, at least when forming one layer, procedures of the first pattern forming process and the second pattern forming process may be reversed. In addition, a plurality of kinds of compositions may be applied to a different region at the same time.

In the embodiment, a case where the solvent removal process is performed after the first pattern forming process and the second pattern forming process are performed in a single layer is representatively described. However, for example, the solvent removal process may be separately performed respectively after the first pattern forming process and after the second pattern forming process.

In the embodiment, a case where the first pattern and the second pattern are formed when forming every layer is representatively described. However, for example, the laminate may include a layer not having the first pattern or a layer not having the second pattern. In addition, a layer (for example, a layer only having the support section) in which a portion corresponding to the entity section is not formed may be formed on a surface contacting with the stage (just on the stage) such that the layer may be caused to function as a sacrificial layer.

In the three-dimensional modeled-object manufacturing method according to the embodiment of the invention, procedures of the processes or treatments are not limited to above description. At least some of the processes or treatments may be exchanged. For example, in the embodiment, a case where the binder removal process, the bonding process, and the support section removal process are sequentially performed after the laminate is obtained is representatively described. However, the procedures of the processes or treatments may be exchanged. More specifically, the binder removal process, the support section removal process, and the bonding process may be performed in this order, and the support section removal process, the binder removal process, and bonding process may be performed in this order. In addition, the layer forming process and the solvent removal process may proceed at the same time. A sequential bonding treatment may be carried out for each layer. In this case, the bonding treatment for each layer can be appropriately performed by, for example, radiation with laser light.

In the bonding process, removing of the binder is also performed together with the bonding of the particles. In this case, the binder removal process can be omitted.

In the bonding process of the embodiment, a case where the bonding of the particles in the entity section forming composition is performed and the bonding of the particles in the support section forming composition is performed is mainly described. However, in the bonding process, the bonding of the particles contained in the entity section forming composition may be selectively performed and the particles contained in the support section forming composition may not be bonded. Such a selective bonding can be appropriately performed by adjusting a relation between the melting point of the constituent material of each particle and the temperature in the sintering process.

In addition, depending on the shape of the three-dimensional modeled-object to be manufactured, the support section may not be formed.

In the manufacturing method according to the embodiment of the invention, a pre-treatment process, an intermediate-treatment process, and a post-treatment process may be performed if necessary.

Examples of the pre-treatment process include a cleaning process of the stage.

Examples of the post-treatment process include a washing process, a shape adjusting process of removing burrs, a coloring process, a coated layer forming process, and a heat treatment process of improving the strength of bonding the particles.

In addition, in the three-dimensional modeled-object manufacturing apparatus, a configuration of each unit can be substituted with an arbitrary configuration exhibiting the same functions. In addition, an arbitrary configuration can also be added thereto.

In the embodiment, a case where the layer is formed directly on the surface of the stage is representatively described. However, the three-dimensional modeled-object may be manufactured by, for example, disposing a modeling plate on the stage and laminating the layer on the modeling plate.

In addition, the three-dimensional modeled-object manufacturing method according to the embodiment of the invention is not limited to the method using the three-dimensional modeled-object manufacturing apparatus.

### Examples

Hereinafter, the embodiment of the invention will be described in more detail with reference to specific examples. However, the embodiment of the invention is not just limited to these examples. In the following description, the treatment not particularly representing a temperature condition was performed at a room temperature (25°C). In addition, also in various measuring conditions, when a temperature condition is not represented, a value is obtained at the room temperature (25°C).

### Example 1

### 1. Manufacture of Three-Dimensional Modeled-Object Manufacturing Composition

100 parts by mass of SUS316L powder having average particle diameter of 3.0 µm and Dmax of 6.5 µm, 12.4 parts by mass of diethylene glycol monobutyl ether acetate as the solvent, 2.0 parts by mass of acrylic resin as the binder, and 0.5 parts by mass of polyester (hydroxyl value of 37 KOHmg/g) as the binder were mixed to obtain the entity section forming composition as the three-dimensional modeled-object manufacturing composition (layer forming composition) (refer to Table 1). The measurement was performed using the rheometer (Physica MCR-300, manufactured by Anton Paar GmbH), thereby obtaining the viscosity η1 at the shear rate of 10 s⁻¹ at 25°C and the viscosity η2 at the shear rate of 1,000 s⁻¹ at 25°C in the entity section forming composition. The viscosity η1 was 17,900 Pa·s and the viscosity η2 was 3,700 Pa·s.

71.8 parts by mass of alumina powder having the average particle diameter of 3.0 µm and Dmax of 6.5 µm, 18.1 parts by mass of diethylene glycol monobutyl ether acetate as the solvent, 2.9 parts by mass of acrylic resin as the binder, and 0.7 parts by mass of polyester (hydroxyl value of 37 KOHmg/g) as the binder were mixed to obtain the support section forming composition as the three-dimensional modeled-object manufacturing composition (layer forming composition) (refer to Table 2). The measurement was performed using the rheometer (Physica MCR-300, manufactured by Anton Paar GmbH), thereby obtaining the viscosity η1 at the shear rate of 10 s⁻¹ at 25°C and the viscosity η2 at the shear rate of 1,000 s⁻¹ at 25°C in the support section forming composition. The viscosity η1 was 17,900 Pa·s and the viscosity η2 was 3,700 Pa·s.

Accordingly, the three-dimensional modeled-object manufacturing composition set formed of the entity section forming composition and support section forming composition was obtained.

### 2. Manufacture of Three-Dimensional Modeled-Object

Using the obtained three-dimensional modeled-object manufacturing composition, the three-dimensional modeled-object having a rectangular parallelepiped shape, in which a designed dimension is 4 mm of thickness, 10 mm of width, and 80 mm of length, was manufactured as in the following.

First, the three-dimensional modeled-object manufacturing apparatus as illustrated in Fig. 12 was prepared. The first pattern (pattern for support section) was formed by discharging the support section forming composition as the plurality of liquid droplets on the stage in the predetermined pattern, from the support section forming composition discharging nozzle of the dispenser (piston-type dispenser). At the time, the temperature of the support section forming composition was 25°C.

Next, the second pattern (pattern for entity section) was formed by discharging the entity section forming composition as the plurality of liquid droplets on the stage in the predetermined pattern, from the entity section forming composition discharging nozzle of the dispenser (piston-type dispenser). At the time, the temperature of the entity section forming composition was 25°C.

Accordingly, the layer having the first pattern and the second pattern was formed. The thickness of the layer was 50 µm.

Then, the heating treatment at 180°C was carried out with respect to the layer having the first pattern and second pattern. The solvent contained in the layer was removed (solvent removal process).

Then, the new layer forming process (first pattern forming process and second pattern forming process) onto the layer in which the solvent was removed and the solvent removal process was repeatedly performed, thereby obtaining a laminate having a shape corresponding to the three-dimensional modeled-object to be manufactured.

Next, the binder removal treatment was carried out with respect to the obtained laminate by heating under the conditions of 400°C for five hours in nitrogen gas, thereby obtaining a binder removed body.

Next, the sintering treatment (bonding treatment) was carried out with respect to the binder removed body by heating under the conditions of 1,320°C for two hours in hydrogen gas.

Then, the support section was removed, thereby obtaining a targeted three-dimensional modeled-object.

### Examples 2 to 10

The three-dimensional modeled-object manufacturing composition (three-dimensional modeled-object manufacturing composition set) and the three-dimensional modeled-object were manufactured in the same manner as those of Example 1 except that compositions of the entity section forming composition and support section forming composition were respectively set as shown in Tables 1 and 2.

### Example 11

The three-dimensional modeled-object manufacturing composition and the three-dimensional modeled-object were manufactured in the same manner as those of Example 1 except that only the entity section forming composition was used as the three-dimensional modeled-object manufacturing composition (layer forming composition) without using the support section forming composition (first pattern forming process was omitted).

### Comparative examples 1 to 5

The three-dimensional modeled-object manufacturing composition (three-dimensional modeled-object manufacturing composition set) and the three-dimensional modeled-object were manufactured in the same manner as those of Example 1 except that compositions of the entity section forming composition and support section forming composition were set as shown in Tables 1 and 2.

The compositions of the three-dimensional modeled-object manufacturing composition (three-dimensional modeled-object manufacturing composition set) of Examples and Comparative Examples are summarized as shown in Tables 1 and 2. In Tables 1 and 2, the diethylene glycol monobutyl ether acetate was represented by "BCA".

In addition, all the values of volume per liquid droplet of the support section forming composition and the entity section forming composition of Examples and Comparative Examples were in a range of 100 pL to 5,000 pL. In addition, in Examples and Comparative Examples, all the values of solvent content in the layer after the solvent removal process were in a range of 0.5 mass% to 20 mass%.

### Table 1

**Table 1**

| | Entity Section Forming Composition | | | | | | | | | | | | | | |
|---|---|---|---|---|---|---|---|---|---|---|---|---|---|---|---|
| | Particle | | | | | Solvent | | | Binder | | | | | η1 [mPa•s ] | η2 [mPa•s ] |
| | | | | | | | | | Acrylic resin | | Polyester | | | | |
| | Constituen t Material | Average Particle Diamete r [µm] | Dma x [µm] | Conten t [Part by Mass] | Content Percentag e [Volume% ] | Constituen t Material | Conten t [Part by Mass] | Content Percentag e [Volume% ] | Conten t [Part by Mass] | Content Percentag e [Volume% ] | Hydroxyl Value [KOHmg/g ] | Conten t [Part by Mass] | Content Percentag e [Volume% ] | | |
| Example 1 | SUS316L | 3.0 | 6.5 | 100 | 44.7 | BCA | 12.4 | 47.3 | 2.0 | 6.5 | 37 | 0.5 | 1.5 | 17900 | 3700 |
| Example 2 | SUS316L | 3.0 | 6.5 | 100 | 45.2 | BCA | 11.8 | 45.8 | 2.1 | 6.9 | 37 | 0.7 | 2.1 | 15500 | 3500 |
| Example 3 | SUS316L | 3.0 | 6.5 | 100 | 46.0 | BCA | 11.1 | 43.7 | 1.1 | 3.7 | 50 | 2.2 | 6.7 | 12000 | 4100 |
| Example 4 | SUS316L | 3.0 | 6.5 | 100 | 45.9 | BCA | 11.0 | 43.0 | 1.4 | 4.7 | 37 | 2.1 | 6.4 | 8100 | 3890 |
| Example 5 | SUS316L | 3.0 | 6.5 | 100 | 45.9 | BCA | 10.9 | 42.8 | 1.2 | 4.0 | 37 | 2.4 | 7.3 | 7030 | 3810 |
| Example 6 | SUS316L | 3.0 | 6.5 | 100 | 45.9 | BCA | 10.6 | 41.6 | 1.0 | 3.3 | 37 | 3.0 | 9.2 | 6290 | 4000 |
| Example 7 | SUS316L | 3.0 | 6.5 | 100 | 45.4 | BCA | 11.6 | 45.1 | 1.5 | 4.9 | 19 | 1.5 | 4.5 | 8190 | 4920 |
| Example 8 | SUS316L | 3.0 | 6.5 | 100 | 45.1 | BCA | 12.5 | 48.3 | 2.0 | 6.5 | - | - | - | 20300 | 3890 |
| Example 9 | SUS316L | 3.0 | 6.5 | 100 | 45.0 | BCA | 12.7 | 49.0 | 1.8 | 5.9 | - | - | - | 13900 | 2910 |
| Example 10 | SUS316L | 3.0 | 6.5 | 100 | 48.1 | BCA | 11.7 | 48.1 | 1.1 | 3.8 | - | - | - | 12000 | 4100 |
| Example 11 | SUS316L | 3.0 | 6.5 | 100 | 44.7 | BCA | 12.4 | 47.3 | 2.0 | 6.5 | 37 | 0.5 | 1.5 | 17900 | 3700 |
| Comparativ e Example 1 | SUS316L | 3.0 | 6.5 | 100 | 46.4 | BCA | 10.3 | 40.9 | - | - | 50 | 4.1 | 12.7 | 4120 | 1450 |
| Comparativ e Example 2 | SUS316L | 3.0 | 6.5 | 100 | 45.7 | BCA | 11.2 | 43.7 | 1.3 | 4.3 | 19 | 2.1 | 6.4 | 7570 | 5710 |
| Comparativ e Example 3 | SUS316L | 3.0 | 6.5 | 100 | 45.7 | BCA | 11.1 | 43.4 | 1.1 | 3.6 | 19 | 2.4 | 7.3 | 7230 | 6280 |
| Comparativ e Example 4 | SUS316L | 3.0 | 6.5 | 100 | 45.3 | BCA | 12.7 | 49.0 | - | - | 19 | 1.9 | 5.7 | 6600 | 5590 |
| Comparativ e Example 5 | SUS316L | 3.0 | 6.5 | 100 | 55.0 | BCA | 8.9 | 41.8 | 0.8 | 3.2 | - | - | - | 18700 | 5630 |

### Table 2

**Table 2**

| | Support Section Forming Composition | | | | | | | | | | | | | | |
|---|---|---|---|---|---|---|---|---|---|---|---|---|---|---|---|
| | Particle | | | | | Solvent | | | Binder | | | | | η1 [mPa•s ] | η2 [mPa•s ] |
| | | | | | | | | | Acrylic resin | | Polyester | | | | |
| | Constituen t Material | Average Particle Diamete r [µm] | Dma x [µm] | Conten t [Part by Mass] | Content Percentag e [Volume% ] | Constituen t Material | Conten t [Part by Mass] | Content Percentag e [Volume% ] | Conten t [Part by Mass] | Content Percentag e [Volume% ] | Hydroxyl Value [KOHmg/g ] | Conten t [Part by Mass] | Content Percentag e [Volume% ] | | |
| Example 1 | Alumina | 3.0 | 6.5 | 71.8 | 44.7 | BCA | 18.1 | 47.3 | 2.9 | 6.5 | 37 | 0.7 | 1.5 | 17900 | 3700 |
| Example 2 | Alumina | 3.0 | 6.5 | 72.2 | 45.2 | BCA | 17.5 | 45.8 | 3.1 | 6.9 | 37 | 1.0 | 2.1 | 15500 | 3500 |
| Example 3 | Alumina | 3.0 | 6.5 | 72.8 | 46.0 | BCA | 16.5 | 43.7 | 1.7 | 3.7 | 50 | 3.3 | 6.7 | 12000 | 4100 |
| Example 4 | Alumina | 3.0 | 6.5 | 72.8 | 45.9 | BCA | 16.3 | 43.0 | 2.1 | 4.7 | 37 | 3.1 | 6.4 | 8100 | 3890 |
| Example 5 | Alumina | 3.0 | 6.5 | 72.7 | 45.9 | BCA | 16.2 | 42.8 | 1.8 | 4.0 | 37 | 3.6 | 7.3 | 7030 | 3810 |
| Example 6 | Alumina | 3.0 | 6.5 | 72.7 | 45.9 | BCA | 15.8 | 41.6 | 1.5 | 3.3 | 37 | 4.5 | 9.2 | 6290 | 4000 |
| Example 7 | Alumina | 3.0 | 6.5 | 72.4 | 45.4 | BCA | 17.2 | 45.1 | 2.2 | 4.9 | 19 | 2.2 | 4.5 | 8190 | 4920 |
| Example 8 | Alumina | 3.0 | 6.5 | 72.1 | 45.1 | BCA | 18.5 | 48.3 | 2.9 | 6.5 | - | - | - | 20300 | 3890 |
| Example 9 | Alumina | 3.0 | 6.5 | 72.0 | 45.0 | BCA | 18.7 | 49.0 | 2.7 | 5.9 | - | - | - | 13900 | 2910 |
| Example 10 | Alumina | 3.0 | 6.5 | 74.3 | 48.1 | BCA | 17.8 | 48.1 | 1.7 | 3.8 | - | - | - | 12000 | 4100 |
| Example 11 | - | - | - | - | - | - | - | - | - | - | - | - | - | - | - |
| Comparativ e Example 1 | Alumina | 3.0 | 6.5 | 73.0 | 46.4 | BCA | 15.4 | 40.9 | - | - | 50 | 6.2 | 12.7 | 4120 | 1450 |
| Comparativ e Example 2 | Alumina | 3.0 | 6.5 | 72.5 | 45.7 | BCA | 16.6 | 43.7 | 1.9 | 4.3 | 19 | 3.1 | 6.4 | 7570 | 5710 |
| Comparativ e Example 3 | Alumina | 3.0 | 6.5 | 72.6 | 45.7 | BCA | 16.5 | 43.4 | 1.6 | 3.6 | 19 | 3.6 | 7.3 | 7230 | 6280 |
| Comparativ e Example 4 | Alumina | 3.0 | 6.5 | 72.0 | 45.3 | BCA | 18.7 | 49.0 | - | - | 19 | 2.8 | 5.7 | 6600 | 5590 |
| Comparativ e Example 5 | Alumina | 3.0 | 6.5 | 79.2 | 55.0 | BCA | 14.4 | 41.8 | 1.3 | 3.2 | - | - | - | 18700 | 5630 |

### 3. Evaluation

### 3.1. Discharge Stability of Three-Dimensional Modeled-Object Manufacturing Composition

### 3.1.1. Uniformity in Amount of Discharged Droplet

The three-dimensional modeled-object manufacturing apparatus that was used for manufacturing the three-dimensional modeled-object of Examples and Comparative Examples was prepared. The three-dimensional modeled-object manufacturing composition was discharged to 1,000 liquid droplets from the discharge nozzle of the dispenser (piston-type dispenser) at the frequency of 100 Hz. Microscopic observation was performed on 951^{th} to 1,000^{th} liquid droplets. The uniformity in amount of discharged droplet was evaluated in accordance with the following criteria.
A: The size (impact diameter) of a liquid droplet having the largest impact diameter is 100% or greater and smaller than 120% with respect to a target value of the impact diameter.
B: The size (impact diameter) of the liquid droplet having the largest impact diameter is 120% or greater and smaller than 140% with respect to the target value of the impact diameter.
C: The size (impact diameter) of the liquid droplet having the largest impact diameter is 140% or greater and smaller than 160% with respect to the target value of the impact diameter.
D: The size (impact diameter) of the liquid droplet having the largest impact diameter is 160% or greater and smaller than 200% with respect to the target value of the impact diameter.
E: The size (impact diameter) of the liquid droplet having the largest impact diameter is 200% or greater with respect to the target value of the impact diameter.

### 3.1.2. Uniformity of Composition in Discharged Droplets

The three-dimensional modeled-object manufacturing apparatus that was used for manufacturing the three-dimensional modeled-object of Examples and Comparative Examples was prepared. The three-dimensional modeled-object manufacturing composition was discharged to 5,000 liquid droplets from the discharge nozzle of the dispenser (piston-type dispenser) at the frequency of 100 Hz. Microscopic observation was performed on 4,991^{th} to 5,000^{th} liquid droplets. The uniformity of composition in discharged droplets was evaluated in accordance with the following criteria.
A: The particles were uniformly dispersed in the liquid droplet, and the unwilling variation in the composition was not observed.
E: The unwilling separation between particles and solvent was observed in the liquid droplet, and the unwilling variation in the composition occurred in the liquid droplet.

### 3.2. Dimensional Accuracy of Three-Dimensional Modeled-Object

In the three-dimensional modeled-object of Examples and Comparative Examples, the thickness, the width, and the length were measured, and deviations respectively from design values thereof were obtained. The dimensional accuracy of three-dimensional modeled-object was evaluated in accordance with the following criteria.
A: The largest deviation among the deviations from the design values of the thickness, the width, and the length is less than 1.0%.
B: The largest deviation among the deviations from the design values of the thickness, the width, and the length is 1.0% or more and less than 2.0%.
C: The largest deviation among the deviations from the design values of the thickness, the width, and the length is 2.0% or more and less than 4.0%.
D: The largest deviation among the deviations from the design values of the thickness, the width, and the length is 4.0% or more and less than 7.0%.
E: The largest deviation among the deviations from the design values of the thickness, the width, and the length is 7.0% or more.

The results are summarized as shown in Table 3.

### Table 3

**Table 3**

| | Discharge Stability of Three-Dimensional Modeled-Object Manufacturing Composition | | | | Dimensional Accuracy of Three-Dimensional Modeled-Object |
|---|---|---|---|---|---|
| | Uniformity in Amount of Discharged Droplet | | Uniformity of Composition in Discharged Droplets | | |
| | Entity Section Forming Composition | Support Section Forming Composition | Entity Section Forming Composition | Support Section Forming Composition | |
| Example 1 | A | A | A | A | A |
| Example 2 | A | A | A | A | A |
| Example 3 | A | A | A | A | A |
| Example 4 | A | A | A | A | A |
| Example 5 | A | A | A | A | A |
| Example 6 | A | A | A | A | A |
| Example 7 | A | A | A | A | A |
| Example 8 | A | A | A | A | A |
| Example 9 | A | A | A | A | A |
| Example 10 | A | A | A | A | A |
| Example 11 | A | - | A | - | A |
| Comparative Example 1 | E | E | E | E | E |
| Comparative Example 2 | E | E | E | E | E |
| Comparative Example 3 | E | E | E | E | E |
| Comparative Example 4 | E | E | E | E | E |
| Comparative Example 5 | E | E | E | E | E |

As is apparent from Table 3, according to the embodiment of the invention, it was possible to efficiently manufacture the three-dimensional modeled-object having high dimensional accuracy and reliability. On the contrary, in the comparative examples, satisfactory results were not obtained. In addition, the three-dimensional modeled-objects in Examples and each Comparative Examples were visually observed. As a result, occurrence of remarkable sagging was not observed in examples; however, remarkable sagging was observed in comparative examples.

## Claims

1. A three-dimensional modeled-object manufacturing composition for forming a layer (1) in a method of manufacturing a three-dimensional modeled-object (10) in which the layer is formed using a discharge method and a plurality of the layers is laminated, the composition comprising:
a plurality of particles; and
a solvent dispersing the particles,
wherein a viscosity η1 at a shear rate of 10 s⁻¹ at 25°C is 6,000 mPa·s or higher, and
wherein a viscosity η2 at a shear rate of 1,000 s⁻¹ at 25°C is 5,000 mPa·s or lower.

2. The three-dimensional modeled-object manufacturing composition according to claim 1,
wherein a content percentage of the particles is 50 volume% or lower.

3. The three-dimensional modeled-object manufacturing composition according to claim 1 or claim 2,
wherein a maximum particle diameter Dmax of the particles is 50 µm or smaller.

4. The three-dimensional modeled-object manufacturing composition according to any one of the preceding claims, further comprising:
a binder having a function of temporarily binding the particles in a state where the solvent is removed.

5. The three-dimensional modeled-object manufacturing composition according to claim 4,
wherein a content percentage of the binder is 5.0 volume% or higher.

6. The three-dimensional modeled-object manufacturing composition according to claim 4 or claim 5,
wherein acrylic resin and polyester are contained as the binder.

7. A three-dimensional modeled-object manufacturing method comprising:
forming a layer (1) by discharging the three-dimensional modeled-object manufacturing composition according to any one of the preceding claims; and
removing the solvent contained in the layer,
wherein a series of processes including the forming of the layer and the removing of the solvent are repeatedly performed.

8. The three-dimensional modeled-object manufacturing method according to claim 7,
wherein the forming of the layer includes forming a first pattern and forming a second pattern, and
wherein, in at least one of the forming of the first pattern and the forming of the second pattern, the three-dimensional modeled-object manufacturing composition is used.

9. The three-dimensional modeled-object manufacturing method according to claim 7 or claim 8, further comprising:
bonding the particles, after the series of processes are repeated.

10. The three-dimensional modeled-object manufacturing method according to any one of claims 7 to 9,
wherein the three-dimensional modeled-object manufacturing composition is discharged by a dispenser.
